(19) **Europäisches Patentamt**
**European Patent Office**
**Office européen des brevets**

(11) **EP 3 783 538 A1**

(12) **EUROPEAN PATENT APPLICATION**

(43) Date of publication:
**24.02.2021 Bulletin 2021/08**

(51) Int Cl.:
**G06N 3/04** *(2006.01)*    **G06N 3/08** *(2006.01)*

(21) Application number: **19193342.3**

(22) Date of filing: **23.08.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Robert Bosch GmbH**
**70442 Stuttgart (DE)**

(72) Inventor: **Blaiotta, Claudia**
**71272 Renningen (DE)**

(54) **ANALYSING INTERACTIONS BETWEEN MULTIPLE PHYSICAL OBJECTS**

(57)    The invention relates to a system (100) for predicting object feature vectors of multiple interacting physical objects. The system uses a decoder model, which includes a prediction model and of a set of propagation models for a set of multiple interaction types; and observation data representing sequences of observed object feature vectors of the interacting objects. For a sequence of object feature vectors to be predicted of a first interacting object, a sequence of corresponding pairwise interaction types from the set of multiple interaction types is obtained. Propagation data from a second object to a first object is determined using the propagation model indicated by the sequence of interaction types. The object feature vector is predicted using a given prediction model based on at least the determined propagation data.

Fig. 4

EP 3 783 538 A1

**Description**

**FIELD OF THE INVENTION**

The invention relates to a system for predicting object feature vectors of multiple interacting physical objects, and to a corresponding computer-implemented method. The invention further relates to a system for classifying pairwise interactions between multiple physical objects into a set of multiple interaction types, and to a corresponding computer-implemented method. The invention also relates to a system for training models for the above systems, and a corresponding computer-implemented method. The invention further relates to a computer-readable medium comprising instructions to perform one of the above methods and/or model data for use by the above methods and systems.

**BACKGROUND OF THE INVENTION**

Various physical systems can be naturally represented as a set of objects with relational dependencies among them. For example, a traffic situation around an autonomous vehicle may be seen as a system in which various other actors, such as other vehicles, bikes, and pedestrians, interact with each other and thereby influence each other's trajectories. As another example, a manufacturing process may be considered as a system in which various devices, e.g., autonomous robots, interact with each other according to interaction dynamics. In such cases, although no explicit rules for interactions may be known, still the interactions may show a degree of predictability. In various settings, e.g., in a monitoring system for the manufacturing process or a control system of the autonomous vehicle, it is desirable to be able to use this predictability to automatically reason about the state of such a system, e.g., in order to make predictions about its future state. For example, the autonomous vehicle may brake if a dangerous traffic situation is predicted. In order to reason accurately about such systems, it is desirable to model the systems in terms of the individual physical objects and the way that they interact with each other.

In Kipf et al., "Neural Relational Inference for Interacting Systems" (available at https://arxiv.org/abs/1802.04687 and incorporated herein by reference), a model is proposed called the neural relational inference (NRI) model. This is an unsupervised model that learns to infer interactions between components of a dynamical system while simultaneously learning the dynamics purely from observational data. The NRI model takes the form of a variational auto-encoder which learns to encode a dynamical system by determining discrete interaction type between each pair of objects of the system. These encodings can then be used to predict their future dynamics.

Unfortunately, the model of Kipf et al. assumes that the relationships between objects of the dynamic system are stationary. This assumption often does not hold in practice. For example, in a traffic situation, two traffic participants may at first be far away from each other, in which case the behaviour of the first traffic participant may not be much affected by the behaviour of the other traffic participant. However, when the traffic participants get closer to each other and, for example, are at risk of colliding into each other, their behaviour will start affecting each other, until they for example avoid a collision and they again start moving away from each other. Accordingly, it would be desirable to be able to model time-varying interaction configurations and use them to more accurately predict future dynamics of interacting physical objects.

**SUMMARY OF THE INVENTION**

In accordance with a first aspect of the invention, a system for predicting object feature vectors of multiple interacting physical objects is proposed, as defined by claim 1. In accordance with another aspect of the invention, a corresponding computer-implemented method is proposed, as defined by claim 8. In accordance with a further aspect of the invention, a system for classifying pairwise interactions between multiple physical objects into a set of multiple interaction types is proposed, as defined by claim 10. In accordance with another aspect of the invention, a corresponding computer-implemented method is proposed, as defined by claim 12. In accordance with a still further aspect of the invention, a system for training an encoder model and a decoder model is proposed, as defined by claim 14. In accordance with another aspect of the invention, a corresponding computer-implemented method is proposed, as defined by claim 16. In accordance with an aspect of the invention, a computer-readable medium is provided as defined by claim 17.

Various measures discussed herein relate to interacting physical objects, for example, traffic participants, autonomous robots in a manufacturing plant, physical particles, etcetera. Observations of the separate physical objects may be available in the form of sequences of observed object feature vectors of the separate objects. The object feature vectors may be indicative of respective physical quantities of the physical objects. For example, at a given set of discrete measurement times, the object feature vectors of the multiple interacting objects, e.g., their locations, velocities, accelerations, etcetera, may have been determined. Generally, the observed object feature vectors may be determined based on input signals from various sensors, e.g., camera, radar, LiDAR, ultrasonic sensors, or any combination. Accordingly, the object feature vectors of respective objects may represent the state of the physical system at a point in time.

In order to model the latent connectivity dynamics of such interacting objects, interestingly, the inventors devised to capture pairwise interactions between the objects at a particular point in time using interaction types from a set of multiple interaction types. For example, given observations of the objects at multiple points in time, the latent connectivity dynamics corresponding to these observations may be expressed in terms of interaction types between each pair of objects at each point in time. Interestingly, the interaction types between a pair of objects may vary over time, e.g., in a sequence of interaction types for a pair of objects, at least two different interaction types may occur. For example, two pedestrians may first be moving independently from each other but may start affecting each other's trajectories as they get closer to each other. Thereby, a more accurate model of the connectivity dynamics may be obtained than if interaction types are assumed to remain static over time.

The overarching concept of using modelling latent connectivity dynamics as sequences of pairwise interaction types as proposed herein may be used in various devices and methods. Based on sequences of object feature vectors of multiple interacting objects, predictions can be made extending these sequences according to future pairwise interaction types between the objects, that may themselves be predicted. For example, a model, referred to herein as decoder model, may be trained to most accurately perform such predictions, e.g., a prediction of a future traffic situation based on a sequence of observed traffic situations.

Apart from predicting object feature vectors based on future interaction types, it is also possible to determine past interaction types corresponding to sequences of observed object feature vectors. A model, referred to herein as encoder model, may be trained to most accurately determine these interaction types, e.g., to accurately select particular interaction type for a pair of objects, or to accurately determine probabilities of respective interaction types for a pair of objects. For example, such a latent representation may indicate, for each pair of objects and each measured time point, an estimate of the probability that these two objects, at that point in time, were interacting according to respective interaction type. Interaction types determined in this way may provide a particularly meaningful representation of the past observations, for example, for use in another machine learning model. For example, pairs of traffic participants in a traffic situation may be classified according to their type of interaction at some point in time, making it possible to train better models for reasoning about the traffic situation.

As an example, the encoder model and/or decoder model may comprise neural networks. For example, the encoder model and/or decoder model may comprise at least 1000 nodes, at least 10000 nodes, etcetera. Detailed examples of possible neural network architectures are provided herein.

Although labelled data may be used to train the encoder model, e.g., labelled data comprising observation data with given interaction types, interestingly, this is not needed. Instead, in various embodiments, parameters of an encoder model for determining interaction types from observation data and of a decoder model for predicting object feature vectors of a given interaction type may be trained in a common training procedure; optionally in combination with a model, referred to herein as prior model, for predicting pairwise interaction types from previous observations and/or their interaction types. To perform this training, it may not be needed to manually assign a meaning to particular interaction types; instead, the training procedure may determine appropriate interaction types that best fit the training data. For example, it may be automatically determined that for bikes it is useful to distinguish between fast and slow bikes but for pedestrians it is not. The number of interaction types may be predefined but even this is not needed, e.g., this number may be a hyperparameter.

Specifically, the decoder model and encoder model can be jointly trained to minimize a loss of recovering observed object feature vectors as predictions of the decoder model based on the pairwise interaction types determined by the encoder model. Accordingly, decoder models and encoder models as described herein may be interrelated not only because of their common design but also in the sense that the encoder model may learn interaction types that best allow the decoder model to predict object feature vectors, and the decoder model may predict object feature vectors for the particular interaction types the encoder has been trained to determine.

In order to predict object feature vectors or determine interaction types, various embodiments make use of sets of propagation models for the multiple interaction types. In particular, both the decoder model and the encoder model may comprise propagation models for the multiple interaction types, although the propagation models used in the two cases are typically different. Propagation models, also known as "message passing functions" or "message functions" in the context of graph neural networks, provide a particularly effective way of using information about other interacting objects to make derivations about an interacting object. A propagation model may be a trainable function applied to an interacting object and respective other interacting objects to obtain respective contributions, or "messages", for reasoning about the first interacting object. The respective contributions may be aggregated into an overall contribution, or "aggregated message". The overall contribution can then be used to reason about the interacting object, e.g., to prediction a future object feature vector of the interacting object or to determine a hidden state. Generally, propagation models may allow information sharing between multiple objects in a generic and efficient way, since the propagation model may be trained to be independent of particular objects and the aggregation may allow a flexible number of other objects to be used.

While the conventional use of propagation models in graph neural networks typically involves using one fixed propagation model, interestingly, the encoder and decoder models may comprise a different propagation model for each interaction type, wherein the propagation model to be applied is moreover selected dynamically based on a current interaction type between a pair of objects, e.g., at a particular point in time. For example, in the decoder model, propagation data to an interacting object from one or more other interacting objects may thus be used to predict an object feature vector of the interacting object, using a trainable prediction model. In the encoder model, propagation data to an interacting object from one or more interacting objects may be used to determine a hidden state of the interacting object that can then be used by a classification model to determine an interaction type. In any case, selecting a propagation model according to a current interaction type may allow the latent connectivity dynamics to be used in the encoder and decoder models in a particularly efficient way, namely, by allowing separate propagation models for the separate interaction types to be trained and dynamically used depending on the inferred relation between different objects at a particular point in time.

Accordingly, models are provided that allow evolving latent connectivity dynamics between a set of interacting objects to be effectively inferred from a set of sequential observations and/or that allow behaviour of such interacting objects corresponding to such connectivity dynamics to be predicted. Interestingly, this may be done without directly measuring pairwise relations between the objects. The decoder model, e.g., a conditional likelihood model, may define how observed object feature vectors are generated given the latent representation, e.g., time-dependent pairwise interaction types. Optionally, the decoder model may be combined with a prior model for predicting pairwise interaction types to form together a generative model explaining dynamics of systems with hidden interaction configurations. The decoder model and/or prior may be trained similarly to a variational autoencoder together with the encoder model, e.g., by optimizing a loss corresponding to a training dataset, e.g., in terms of a variational lower bound on the marginal likelihood of the training data. Thereby, a more expressive description of the latent connectivity is obtained and as a result, more accurate predictions of future dynamics can be made.

Optionally, based on inferred dynamics, e.g., based on the determined sequences of pairwise interaction types, a control signal may be determined. Such a control signal may be provided to one or more actuators to effect an action in the environment where the observations were made. For example, a physical system from which the observations originated, may be controlled using the control signal. Such a physical system can for example be a computer-controlled machine, e.g. a robot, a vehicle, a domestic appliance, a manufacturing machine, or a personal assistant; or a system for conveying information, e.g. a surveillance system. As an example, an autonomous vehicle may use the inferred interaction configurations of traffic participants, e.g., as a latent scene representation. For example, the inferred interaction types may be used as an input to a behavioural planning module of the autonomous vehicle in order to select manoeuvres that minimize the risk of collision with other traffic participants and/or ensure socially-compliant interaction with pedestrians.

Optionally, the trained models are used to generate synthetic observation data for use as training and/or test data in training a further machine learning model, for example, a neural network. For example, the sequences of predicted object feature vectors may represent trajectories of fictitious interacting objects at discrete points in time. Simulated data may be used for data augmentation, e.g., in order to train the second machine learning on larger datasets and/or datasets of situations for which it is hard to obtain training data, e.g., dangerous traffic situations, rare combinations of weather and/or traffic conditions, etcetera, without the need to perform further real physical measurements.

Optionally, the current object feature vector comprises one or more of a position, a velocity, and an acceleration of the first interacting object. This way, spatial configurations of interacting objects, e.g., traffic participants in a traffic situation, autonomous robots in a warehouse, etcetera can be modelled. For example, object feature vectors of respective objects may be derived from camera images, or obtained from location and/or motion sensors of the objects themselves, etcetera.

Optionally, the decoder model data further represents a set of transition probabilities of previous pairwise interaction types being succeeded by current pairwise interaction types. For example, the decoder model may comprise a Markov model of pairwise interaction types. Such transition probabilities may be used to predict pairwise interaction types; in other words, the transition probabilities may make up a prior model that forms a generative model together with the decoder model. In particular, a pairwise interaction type between a first and second interacting object may be predicted based on a previous pairwise interaction type between the first and the second interacting object by sampling the pairwise interaction type according to the set of transition probabilities. By using pairwise interaction types, a prior model may be obtained with a relatively small number of parameters, thus leading to efficient learning and reduced risk of overfitting.

Optionally, pairwise interaction types between first and second interacting objects are predicted by determining respective representations of interacting objects based on previous object feature vectors of the respective interacting objects, and determining pairwise interaction types based on such representations. Determining the representations and/or using them to predict interaction types may be performed with trainable models that are part of the decoder model. Interestingly, this way, correlations among the different interacting objects can be taken into account for the predictions in a relatively efficient way. As the inventors realized, in order to take into account correlations among interacting objects, it may be possible to model attributes of different pairs of object at a given time-step as being conditionally dependent on the previous interaction types. However, automatically learning such a prior may be inefficient, e.g., involving estimating

$K^{N2-N+1}$ free parameters where $K$ is the number of interaction types and $N$ the number of objects. By determining representations of respective objects based on object feature vectors of these objects, however, this may be avoided; e.g., the representations can be determined separately for the interacting objects. Still, by using these representations to determine pairwise interaction types, in other words by conditioning the prior on the history of object trajectories, correlations among interacting objects may be taken into account.

Optionally, the decoder model data further represents parameters of a recurrent model such as a gated recurrent unit (GRU) or a long short-term memory (LTS). The representation of an interacting object used to predict a pairwise interaction type may be determined by applying the recurrent model sequentially to previous object feature vectors of the interacting object. This way, the object trajectory can be efficiently aggregated into a representation of the interacting object in a way that is independent of the number of time steps and such that a good way of representing the interacting object to make the prediction can be automatically learned.

Optionally, the representations of the interacting objects used to predict pairwise interaction types are determined from immediately preceding object feature vectors of the respective interacting agents. For example, in various real-life settings, interactions between objects may be assumed to show first order Markovian dynamics, e.g., to predict behaviour at a time step, only information form the immediately preceding time step may be relevant. In such cases, the use of recurrent models may be avoided, e.g., the object feature vectors themselves may be used directly as representations, or the representations may be derived from the object feature vectors. Accordingly, in such cases, a more efficient model with fewer parameters may be obtained.

Optionally, an object feature vector may be predicted by using the prediction model to determine parameters of a probability distribution, and sampling the object feature vector from the probability distribution. For example, the prediction model may be applied based on at least the determined propagation data. Since dynamics of interacting objects are typically non-deterministic and may thus vary widely, it may be more effective to use a model that can consider multiply hypotheses using probability distributions to describe interaction dynamics, than to training a model directly to make particular predictions. For example, such probability distributions may be used to generate multiple predictions of future trajectories of the interacting objects that are representative of various possible evolutions of the system.

Similarly, also an interaction type may be determined using the classification model by applying the classification model to determine parameters of a probability distribution for the interaction type, and sampling the interaction type from the parameters of the probability distribution. In other words, the problem of estimating interaction types may be phrased from a Bayesian perspective as that of evaluating a posterior probability distribution over interaction types of the interacting objects. The classification model may be applied to at least the hidden states of the first and the second object.

Optionally, when determining pairwise interaction types based on observation data, a hidden state of an interacting object may be determined by recursively applying a recurrent model such as a GRU or LTSM. As discussed above, hidden states are typically determined using propagation data. By using a recurrent model, also history data may be efficiently and generically used in the hidden representations. For example, propagation data from the second to the first object may comprise the hidden states of the objects as determined by the recurrent model. However, it is also possible to, instead or in addition, use the current observed feature vectors as input to the propagation model.

Optionally, not only hidden states based on preceding observations are used to determine interaction types, but also further hidden states based on following observations. In particular, a further hidden state of a first interacting object may be determined based on at least an immediately following further hidden state of the first interacting object. Similarly to the regular hidden states, a propagation model may be used to integrate further hidden states or object feature vectors of other interacting objects into the further hidden state, and the further hidden states may be determined using a recurrent model such as a GRU or LTSM. To determine an interaction type between a first and second interaction object, the further hidden state may be used as input to the classification model. By using the further hidden states, additional knowledge from future observations may be used to more accurately infer the interaction types.

Optionally, when training the decoder model and encoder model, the loss comprises a divergence between the determined sequences of pairwise interaction types and predicted interaction types of the decoder model. Parameters for predicting the interaction types may be included in the set of parameters of the decoder model. In other words, the loss may be defined to encourage the decoder model to predict interaction types corresponding to those determined by the encoder model. For example, the decoder model may comprise transition probabilities for the interaction types as discussed above, in which case the loss function may minimize a divergence between transitions of interaction types derived from the observation data using the encoder, and the transition probabilities given by the decoder model. Similarly, the decoder model may comprise parameters for models used to determine representations of interacting objects and/or to determine pairwise interaction types based on such representation, the loss function encouraging these models to predict the interaction types given by the encoder model. Accordingly, the decoder model may be trained to accurately predict pairwise interaction types, allowing the decoder model to not only predict interactions for given interaction types, but also to predict the interaction types themselves.

It will be appreciated by those skilled in the art that two or more of the above-mentioned embodiments, implementations, and/or optional aspects of the invention may be combined in any way deemed useful.

Modifications and variations of any computer-implemented method and/or any computer readable medium, which correspond to the described modifications and variations of a corresponding system, can be carried out by a person skilled in the art on the basis of the present description.

**BRIEF DESCRIPTION OF THE DRAWINGS**

These and other aspects of the invention will be apparent from and elucidated further with reference to the embodiments described by way of example in the following description and with reference to the accompanying drawings, in which:

Fig. 1 shows a system for predicting object feature vectors of multiple interacting physical objects;
Fig. 2 shows a system for classifying pairwise interactions between multiple physical objects into a set of multiple interaction types;
Fig. 3 shows a system for training an encoder model and a decoder model;
Fig. 4 shows a detailed example of how to predict object feature vectors of multiple interacting physical objects;
Fig. 5 shows a detailed example of how to classify pairwise interactions between multiple physical objects into a set of multiple interaction types;
Fig. 6 shows a detailed example of a decoder model;
Fig. 7 shows a detailed example of an encoder model;
Fig. 8 shows a computer-implemented method of predicting object feature vectors of multiple interacting physical objects;
Fig. 9 shows a computer-implemented method of classifying pairwise interactions between multiple physical objects into a set of multiple interaction types;
Fig. 10 shows a computer-implemented method of training an encoder model and a decoder model;
Fig. 11 shows a computer-readable medium comprising data.

It should be noted that the figures are purely diagrammatic and not drawn to scale. In the figures, elements which correspond to elements already described may have the same reference numerals.

**DETAILED DESCRIPTION OF EMBODIMENTS**

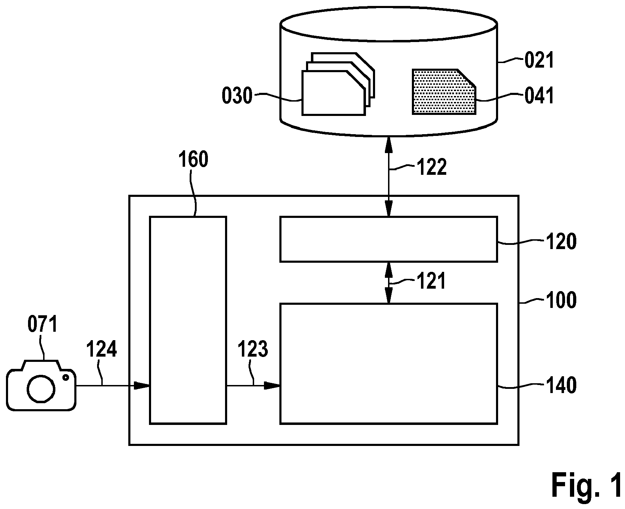

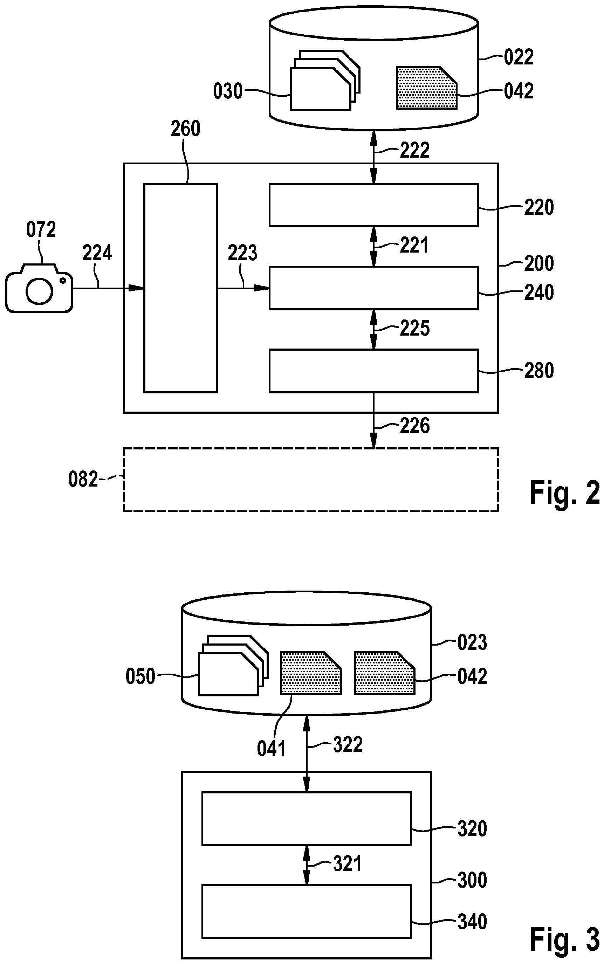

**Fig. 1** shows a system 100 for predicting object feature vectors of multiple interacting physical objects. The system 100 may comprise a data interface 120 and a processor subsystem 140 which may internally communicate via data communication 121. Data interface 120 may be for accessing observation data 030 representing sequences of observed object feature vectors of the multiple interacting objects. Data interface 120 may also be for accessing decoder model data 041 representing parameters of a prediction model and of a set of propagation models for a set of multiple interaction types. The decoder model data 041 may be obtained by training the decoder model along with an encoder model according to a method described herein, e.g., by system 300 of Fig. 3.

The processor subsystem 140 may be configured to, during operation of the system 100 and using the data interface 120, access data 030, 041. For example, as shown in Fig. 1, the data interface 120 may provide access 122 to an external data storage 021 which may comprise said data 030, 041. Alternatively, the data 030, 041 may be accessed from an internal data storage which is part of the system 100. Alternatively, the data 030, 041 may be received via a network from another entity. In general, the data interface 120 may take various forms, such as a network interface to a local or wide area network, e.g., the Internet, a storage interface to an internal or external data storage, etc. The data storage 020 may take any known and suitable form.

Processor subsystem 140 may be configured to, during operation of the system 100 and using the data interface 120, determine sequences of predicted object feature vectors for the multiple interacting objects extending the sequences of observed object feature vectors. To determine the sequences, processor subsystem 140 may be configured to obtaining, for a sequence of object feature vectors to be predicted of a first interacting object, a sequence of corresponding pairwise interaction types between the first interacting object and a second interacting object. To determine the sequences, processor subsystem 140 may further predict an object feature vector of the first interacting object. To predict the object feature vector, processor subsystem 140 may select a propagation model from the set of propagation models according to the pairwise interaction type for the object feature vector. To predict the object feature vector, processor subsystem 140 may further determine propagation data from the second interacting object to the first interacting object by applying the selected propagation model based on previous object feature vectors of the first and the second interacting object. To predict the object feature vector, processor subsystem 140 may further predict the object feature vector using the prediction model based on at least the determined propagation data.

As an optional component, the system 100 may comprise an image input interface 160 or any other type of input interface for obtaining sensor data 124 from a sensor, such as a camera 071. Processor subsystem 140 may be configured to determine observation data 030 from the sensor data 124. For example, the camera may be configured to capture image data 124, processor subsystem 140 being configured to determine object feature vectors of observation data 030 based on image data 124 obtained, via data communication 123, from input interface 160.

As an optional component, the system 100 may comprise an actuator interface (not shown) for providing, to an actuator, actuator data causing the actuator to effect an action in an environment of system 100. For example, processor subsystem 140 may be configured to determine the actuator data based at least in part on sequences of predicted object feature vectors, e.g., by inputting the predicted object feature vector into a machine learning model for determining the actuator data. For instance, the machine learning model may classify sequences of predicted object feature vectors into normal and exceptional situations, e.g., a risk of collision, and to activate a safety system, e.g., a brake, in case an exceptional situation is detected.

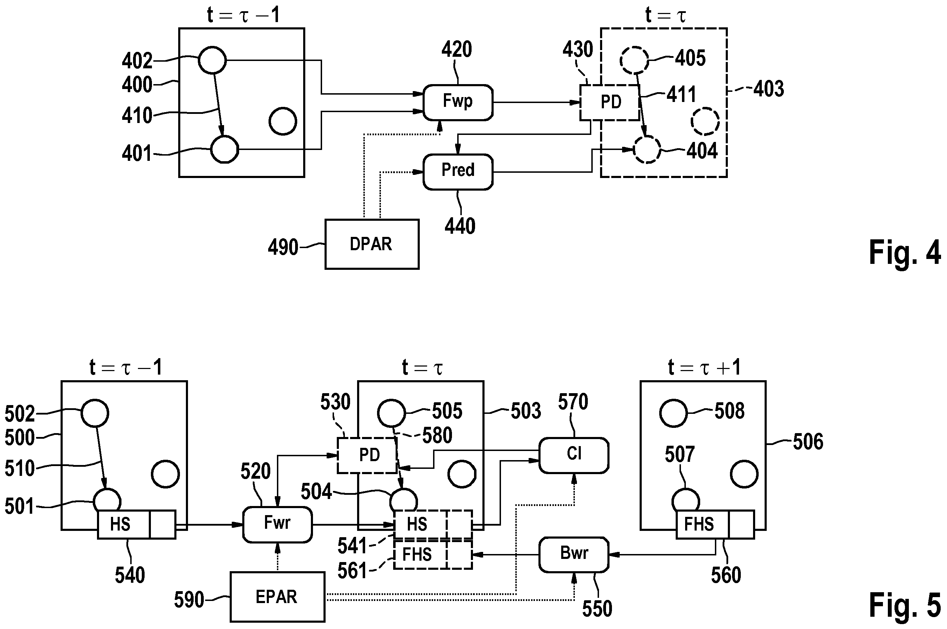

Various details and aspects of the operation of the system 100 will be further elucidated with reference to Figs. 4-7, including optional aspects thereof.

In general, the system 100 may be embodied as, or in, a single device or apparatus, such as a workstation, e.g., laptop or desktop-based, or a server. The device or apparatus may comprise one or more microprocessors which execute appropriate software. For example, the processor subsystem may be embodied by a single Central Processing Unit (CPU), but also by a combination or system of such CPUs and/or other types of processing units. The software may have been downloaded and/or stored in a corresponding memory, e.g., a volatile memory such as RAM or a non-volatile memory such as Flash. Alternatively, the functional units of the system, e.g., the data interface and the processor subsystem, may be implemented in the device or apparatus in the form of programmable logic, e.g., as a Field-Programmable Gate Array (FPGA) and/or a Graphics Processing Unit (GPU). In general, each functional unit of the system may be implemented in the form of a circuit. It is noted that the system 100 may also be implemented in a distributed manner, e.g., involving different devices or apparatuses, such as distributed servers, e.g., in the form of cloud computing.

**Fig. 2** shows a system 200 for classifying pairwise interactions between multiple physical objects into a set of multiple interaction types. The system 200 may comprise a data interface 220 and a processor subsystem 240 which may internally communicate via data communication 221. Data interface 220 may be for accessing observation data 030 representing sequences of observed object feature vectors of the multiple interacting objects. Data interface 220 may be for further accessing encoder model data 042 representing parameters of a classification model and of a set of propagation models for the set of multiple interaction types. The processor subsystem 240 may be configured to, during operation of the system 200 and using the data interface 220, access data 030, 042. Similarly to data interface 120, various implementation options are possible. Shown is access 222 to an external data storage 022 comprising data 030, 042. The encoder model data 042 may be obtained by training the encoder model along with a decoder model according to a method described herein, e.g., by system 300 of Fig. 3.

Processor subsystem 240 may be configured to, during operation of the system, determine sequences of pairwise interaction types for pairs of interacting objects corresponding to the observation data. This determining may comprise determining sequences of hidden states of the interacting objects corresponding to the observation data. As part of this, processor subsystem 240 may be configured to determine an interaction type between a first and a second interacting object. To determine the interaction type, processor subsystem 240 may select a propagation model from the set of propagation models according to an immediately preceding interaction type between the first and the second interacting object. To determine the interaction type, processor subsystem 240 may further determine propagation data from the second interacting object to the first interacting object by applying the selected propagation model based on data of the first and the second interacting object. To determine the interaction type, processor subsystem 240 may further determine a hidden state of the first interacting object based on at least a previous hidden state of the first interacting object and the determined propagation data. To determine the interaction type, processor subsystem 240 may further determine the interaction type using the classification model based on at least the hidden states of the first and the second interacting object.

As an optional component, the system 200 may comprise an image input interface 260 or any other type of input interface for obtaining sensor data 224 from a sensor, such as a camera 072. Processor subsystem 240 may be configured to determine observation data 030 from the sensor data 224. For example, the camera may be configured to capture image data 224, processor subsystem 240 being configured to determine object feature vectors of observation data 030 based on image data 224 obtained, via data communication 223, from input interface 260.

As an optional component, the system 200 may comprise an actuator interface 280 for providing, to an actuator, actuator data 226 causing the actuator to effect an action in an environment 082 of system 200, for example, an environment from which the observation data originates. For example, processor subsystem 140 may be configured to determine a control signal, based at least in part on the determined sequences of pairwise interaction types, and provide control signal via data communication 225 to the actuator interface as control signal 226. For example, a physical system in environment 082 where the observations were made may be controlled using the control signal.

Various details and aspects of the operation of the system 200 will be further elucidated with reference to Figs. 4-7, including optional aspects thereof. Similarly to system 100, system 200 may be embodied as, or in, a single device or apparatus, implemented in a distributed manner, etc.

As a concrete example, system 200 may be an automotive control system for controlling a vehicle. Sensor 072 may be a camera providing images based on which observation data 030 is determined. The vehicle may be an autonomous or semi-autonomous vehicle, but system 200 can also be a driver-assistance system of a non-autonomous vehicle. For example, such a vehicle may incorporate the system 200 to control the vehicle based on images obtained from camera 072, as discussed. In this particular example, system 200 may be configured to control the vehicle by inputting the determined sequences of pairwise interaction types into a behavioural planner module, which outputs a signal 226 for controlling machine actuators. For example, the actuator may be caused to control steering and/or braking of the vehicle. For example, the control system may control an electric motor of the vehicle to perform (regenerative) braking based on detecting an exceptional situation based on the determined sequences of pairwise interaction types.

**Fig. 3** shows a system 300 for training an encoder model and a decoder model. The encoder model may be for classifying pairwise interactions between multiple physical objects into a set of multiple interaction types, e.g., by system 200 of Fig. 2. The decoder model may be for predicting object feature vectors of multiple interacting physical objects, e.g., by system 100 of Fig. 1. The system 300 may comprise a data interface 320 and a processor subsystem 340 which may internally communicate via data communication 321. Data interface 320 may be for accessing decoder model data 041 representing parameters of the decoder model. Data interface 320 may be for further accessing encoder model data 042 representing parameters of the encoder model. Data interface 320 may be for further accessing training data 050 representing a plurality of training instances. The processor subsystem 340 may be configured to, during operation of the system 300 and using the data interface 320, access data 041, 042, 050. Similarly to data interface 120, various implementation options are possible. Shown is access 322 to an external data storage 023 comprising data 041, 042, 050.

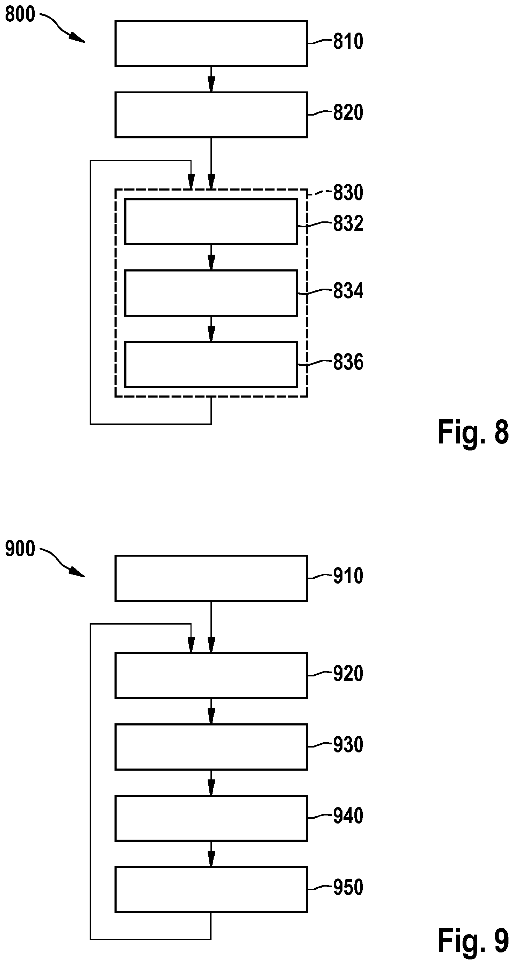

Processor subsystem 340 may be configured to, during operation of the system, optimize the parameters of the decoder model and the encoder model. To optimize the parameters, processor subsystem 340 may select at least one training instance from the training data 050. Th training instance may comprise sequences of observed object feature vectors of multiple interacting objects. To optimize the parameters, processor subsystem 340 may further determine sequences of pairwise interaction types for pairs of the interacting objects according to a method described herein, e.g., method 900 of Fig. 9, based on the encoder model data 042. To optimize the parameters 041, 042, processor subsystem 340 may further minimize a loss of recovering an observed object feature vector by predicting the object feature vector according to a method described herein, e.g., method 800 of Fig. 8, based on the determined sequences of pairwise interaction types and the decoder model data 041.

As optional components, system 300 may further comprise an input interface (not shown) for obtaining sensor data, e.g., to derive training data 050 from, and/or an actuator interface (not shown) for providing, to an actuator, actuator data causing the actuator to effect an action in an environment of the system. For example, the input and actuator interfaces of system 100 or system 200 may be used. Various details and aspects of the operation of the system 300 will be further elucidated with reference to Figs. 4-7, including optional aspects thereof. Similarly to system 100, system 300 may be embodied as, or in, a single device or apparatus, implemented in a distributed manner, etc.

**Fig. 4** shows a detailed yet non-limiting example of how to predict object feature vectors of multiple interacting physical objects using a decoder model. The decoder model in this figure is parametrized by a set **DPAR,** 490, of parameters.

Mathematically, the set of multiple interacting objects may be modelled by a set *V* of *N* interacting objects. The number of interacting objects *N* may be at most or at least 10, or at most or at least 100, for example. Throughout, the set of indexes of objects may be denoted as

$$\mathcal{J} = \{j \in \mathbb{N} \mid 1 \le j \le N\},$$

and the set of objects other than the *j*th object may be denoted as

$$\mathcal{J}_j = \{i \in \mathbb{N} \mid 1 \le i \le N, i \ne j\} = \mathcal{J} \backslash \{j\}.$$

The multiple interacting objects may be considered to form a fully connected graph $\mathcal{G} = (\mathcal{V}, \mathcal{E})$ with *N* nodes $v \in V$ and directed edges $e = (v, v') \in \varepsilon$ without self-loops.

The object features for the multiple interacting objects may be predicted based on observation data representing sequences of observed feature vectors of the multiple interacting objects. The observed feature vectors may together be denoted as a set of measurable feature trajectories

$$\mathbf{X} = \{\mathbf{x}_j\}_{j \in \mathcal{J}},$$

with $\mathbf{x}_j = (\mathbf{x}_j^0, \dots, \mathbf{x}_j^T)$ representing a sequence of observed feature vectors of an individual interacting object, also referred to as a node trajectory, and $\mathbf{x}^t = \{\mathbf{x}_0^t, \dots, \mathbf{x}_N^t\}$ indicating the set of object feature vectors at time $t$. Typically, all object feature vectors have the same length, e.g., $\mathbf{x}_j^t \in \mathbb{R}^D$ for some dimension $D$. For example, in various embodiments, object feature vectors may comprise one or more of a position, a velocity, and an acceleration. For example, in case of two-dimensional observations, the position, velocity, and/or acceleration may be two-dimensional vectors and in case of three-dimensional observations, the position, velocity, and/or acceleration may be three-dimensional vectors. Instead or on addition, other object features may be used. For example, the number of object features may be one, two, three, or at least four. The number of observed time points can be one, two, at least five, or at least ten. The number of interacting objects may be assumed to stay constant over time.

As an example, shown in the figure is a set 400 of observed object feature vectors at a time $t = \tau - 1$. Solid lines are used in the figure that these object feature vectors are known, e.g., comprised in observation data given as input to a system. In this case, set 400 of object feature vectors is schematically represented as a set of positions of interacting objects, shown as circles, in box 400. For example, shown is a circle 401 representing an object feature vector of a first interacting object and a circle 402 representing an object feature vector of a second interacting object.

In various embodiments, pairwise interaction types, from a set of multiple interaction types, are attributed to the interacting objects. When using the decoder model, the set of interaction types is typically fixed. For example, there can be two different interaction types; at least or at most three; or at least or at most five. Although it is possible to assign a meaning to interaction types by hand, e.g., by annotating a training dataset, this is not necessary; instead, during training, an encoder model may be trained to assign interaction types to interacting objects in such a way that the decoder model is best able to predict object feature vectors based on the interaction types.

Throughout, pairwise interaction types may be denoted by values $\mathbf{z}_{ij}^t$. The notation

$$\mathbf{Z} = \{\mathbf{z}_{ij}\}_{j \in \mathcal{J}, i \in \mathcal{J}_j}$$

may be used to indicate a set of interaction type trajectories, e.g., interaction types of a pair of interacting object in an evolution of the system of interacting objects. Notation $\mathbf{z}_{ij} = (\mathbf{z}_{ij}^0, \dots, \mathbf{z}_{ij}^T)$ may denote an individual trajectory. Interestingly, typically $\mathbf{z}_{ij}^{t_1} \neq \mathbf{z}_{ij}^{t_2}$ at some points $t_1$, $t_2$, e.g., for one or more interacting objects, the interaction type between the two objects varies over time. Notation

$$\mathbf{z}^t = \{\mathbf{z}_{ij}^t\}_{j \in \mathcal{J}, i \in \mathcal{J}_j}$$

may be used to denote interaction types at time $t$. Here,

$$\mathbf{z}_{ij}^t \in \mathcal{K}$$

may be a discrete variable encoding an interaction type, e.g., type of edge $(v_i, v_j)$ of graph $\mathcal{G}_t$, at time $t$. Notation

$$\mathcal{K} = \{k \in \mathbb{N} \mid 1 \leq k \leq K\}$$

may be used to denote the set of multiple interaction types.

The figure shows an example of how a set 403 of object feature vectors of the set of interacting physical objects at time $t = \tau$ may be predicted using the decoder model, e.g., extending earlier observation 400 at $t = \tau - 1$ and possibly also earlier additional observations. Dashed lines are used to denote information to be predicted. As the skilled person understands, predictions multiple time steps into the future can be obtained by repeating the process below multiple times, e.g., at least two or at least five times.

Mathematically, the decoder model may be described by the following log-likelihood factorization:

$$p(\mathbf{X}, \mathbf{Z}) = p(\mathbf{Z})p(\mathbf{X}|\mathbf{Z}) = p(\mathbf{z}^0)p(\mathbf{x}^0|\mathbf{z}^0) \prod_{t=1}^{T} p(\mathbf{z}^t|\mathbf{z}^{t-1})p(\mathbf{x}^t|\mathbf{x}^{\tau<t}, \mathbf{z}^t)$$

where $\mathbf{x}^{\tau<t} = (\mathbf{x}^0, ..., \mathbf{x}^{t-1})$. In other words, the decoder model may assume that object feature vectors observed at time $t$ are conditionally independent of the past relational graph connectivity $\mathbf{z}^{\tau<t} = (\mathbf{z}^0, ..., \mathbf{z}^{t-1})$ given $\mathbf{z}^t$ and the history of observations $\mathbf{x}^{\tau<t} = (\mathbf{x}^0, ..., \mathbf{x}^{t-1})$. Factors $p(\mathbf{z}^0)$ and $p(\mathbf{z}^t|\mathbf{z}^{t-1})$ may be regarded as a prior model describing probabilities of particular interaction types occurring. Instead of $p(\mathbf{z}^t|\mathbf{z}^{t-1})$ also other formulations of the prior model are possible, several possibilities of which are discussed below.

Factors $p(\mathbf{x}^0|\mathbf{z}^0)$ and $p(\mathbf{x}^t|\mathbf{x}^{\tau<t}, \mathbf{z}^t)$ may form the decoder model for predicting object feature vectors given interaction types and previous object feature vectors. Effectively, the decoder model may capture parameters governing the conditional probability distribution of the observation data *X* given interaction types Z by evaluating the distribution as the product of *T* factors, where *T* equals the number of measured time points. For each time point *t*, the corresponding factor may be a conditional probability density over features of all interacting objects observed at time *t*, given past feature trajectories and interaction types. Generally, any differentiable probability density function may be used for modelling these factors, for instance multivariate Normal densities are a suitable choice if the observed features take values in a real coordinate space of *D* dimensions.

In various embodiments, the observed object feature vectors may be assumed to have Markovian dynamics conditioned on $\mathbf{z}^t$, in which case the conditional likelihood factors may be simplified to:

$$p(\mathbf{x}^t|\mathbf{x}^{\tau<t}, \mathbf{z}^t) = p(\mathbf{x}^t|\mathbf{x}^{t-1}, \mathbf{z}^t).$$

Shown in particular are first and second object feature vectors 404 and 405 form predicted evolutions of object feature vectors 401 and 402, respectively. In order to predict first object feature vector 404, a corresponding pairwise interaction type 411 between the first interacting object 404 and the second interacting object 405 may be obtained. Generally, there are several possibilities to obtain interaction type 411.

In some embodiments, interaction type 411 is obtained as an input, e.g., from another unit or from the user. This may be desirable, e.g., in order to generate simulated data from scratch. Thus, the interaction types may be manually fixed and the decoder may generate trajectories conditioned on this fixed input.

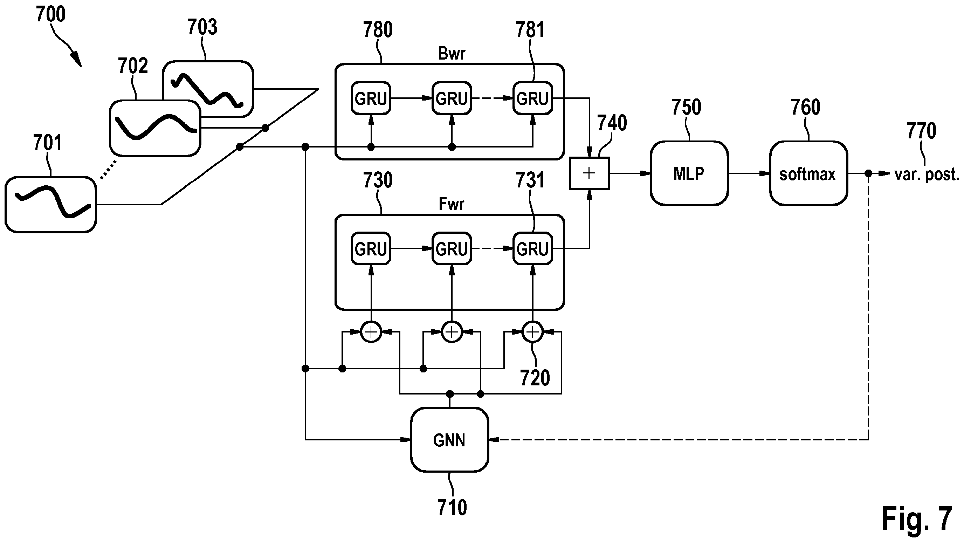

In other embodiments, interaction type 411 may be determined by an encoder model as described, e.g., with reference to Figs. 5 and 7, for example, when training the decoder model as discussed in more detail elsewhere.

In still other embodiments, interaction type 411 may be predicted by a prior model with which the decoder model together forms a generative model. This may be an appropriate choice for making predictions on future behaviour of interacting objects after having observed one or more time steps.

A first possibility for predicting pairwise interaction types is based on a set of transition probabilities of previous pairwise interaction types being succeeded by current pairwise interaction types. In this case, for example, pairwise interaction type 411 at time $t = \tau$ may be predicted based on previous interaction type 410 between the same interacting objects at time $t = \tau - 1$, by sampling pairwise interaction type 411 according to the set of transition probabilities. Previous interaction type 410 may have been predicted as described herein, or, if previous interaction type 410 corresponds to a point in time for which observation data is present, an encoder model may be used to obtain previous interaction type 410 as described, e.g., with reference to Figs. 5 and 7.

Mathematically, for example, transition probabilities may be captured by a Markovian state transition prior over graph connectivity as follows:

$$p(\mathbf{z}^0) = \prod_{j \in \mathcal{J}} \prod_{i \in \mathcal{I}_j} \prod_{k \in \mathcal{K}} \left(\pi_k^0 / Z^0\right)^{z_{ijk}^0}$$

$$p(\mathbf{z}^t|\mathbf{z}^{t-1}) = \prod_{j\in\mathcal{J}} \prod_{i\in\mathcal{I}_j} \prod_{k,k'\in\mathcal{K}} \left(\pi_k^{k'}/Z^{k'}\right)^{z_{ijk}^t z_{ijk'}^{t-1}}$$

$\mathbf{z}_{ij}^t$ is adopted, and:

$$p(z_{ijk}^0 = 1) = \frac{\pi_k^0}{Z^0} = \frac{\pi_k^0}{\sum_{k=1}^K \pi_k^0} \;,$$

$$p(z_{ijk}^t = 1|z_{ijk'}^t = 1) = \frac{\pi_k^{k'}}{Z^{k'}} = \frac{\pi_k^{k'}}{\sum_{k=1}^K \pi_k^{k'}} \;.$$

Here, values

$$\boldsymbol{\pi}^0 = \{\pi_k^0\}_{k\in\mathcal{K}}$$

and

$$\boldsymbol{\pi}^{k'} = \{\pi_k^{k'}\}_{k\in\mathcal{K}}$$

may be comprised in set of parameters **DPAR**. In this particular example, the prior parameters are shared across edges and time steps, e.g., the prior on graph connectivity may comprise a time-homogeneous Markov chains for every graph edge. However, the prior model could be made more expressive by allowing time-dependent and/or edge-dependent parameters. It may also be possible to use a more powerful prior in which attributes, e.g., interaction types, of different edges at a given time-step are conditionally independent only given the entire graph configuration at the previous time-step, however, such a prior may have a lot more parameters so in most cases, the above prior is desirable.

A second possibility for predicting pairwise interaction types may involve determining respective representations of interacting objects based on previous object feature vectors of the respective interacting objects, and determining the pairwise interaction types based on the representations of the interacting objects. In other words, pairwise interaction types may be conditioned on the history of node trajectories. Thereby, a more expressive graph transition prior than the one using transition probabilities may be obtained, but with better scaling characteristics than a model in which interaction types are made conditionally dependent on the entire graph configuration of the previous time step.

As a concrete example, interaction types may be conditioned on node trajectory histories as follows:

$$p(\mathbf{Z}|\mathbf{X}) = p(\mathbf{z}^0) \prod_{t=1}^T \prod_{j\in\mathcal{J}} \prod_{i\in\mathcal{I}_j} p(\mathbf{z}_{ij}^t|\mathbf{x}^{\tau<t})$$

$$= p(\mathbf{z}^0) \prod_{t=1}^T \prod_{j\in\mathcal{J}} \prod_{i\in\mathcal{I}_j} \prod_{k\in\mathcal{K}} \left(\sigma(\boldsymbol{\alpha}_{ij}^t)_k\right)^{z_{ijk}^t},$$

where

$$\mathbf{h}_j^t = \rho_d\big(\mathbf{h}_j^{t-1}, \mathbf{x}_j^{t-1}\big),$$

$$\tilde{\mathbf{h}}_j^t = \varphi_d^\alpha\left(\sum_{i\in\mathcal{I}_j} f_d^\alpha\big(\mathbf{h}_i^t, \mathbf{h}_j^t\big)\right),$$

$$\boldsymbol{\alpha}_{ij}^t = \varphi_\alpha\big([\tilde{\mathbf{h}}_i^t; \tilde{\mathbf{h}}_j^t]\big).$$

Specifically, exemplified by operation $\rho_d$ above, a representation, e.g., $\mathbf{h}_j^t$, of an interacting object may be determined by applying a recurrent model $\rho_d$ sequentially to previous object feature vectors $\mathbf{x}_j^{t-1}$ of the interacting object. In other words, a recursive operation may be used which, at time $t$, updates a deterministic hidden state $\mathbf{h}_j^t$ for each node $j$, given the last hidden state $\mathbf{h}_j^{t-1}$ and node observation $\mathbf{x}_j^{t-1}$. Various recurrent models are known in the art and may be used here, e.g., a Gated Recurrent Unit (GRU) or a Long Short-Term Memory (LSTM) network may be used. In other embodiments, representations $\mathbf{h}_j^t$ of the interacting objects may be determined from immediately preceding object feature vectors of the respective interacting agents, e.g., $\mathbf{h}_j^t = \mathbf{x}_j^{t-1}$. Such a choice can be appropriate, for example, where observed data have conditional Markovian dynamics as also discussed elsewhere.

It may be noted that, in the above example, deterministic hidden states $\mathbf{h}_j^t$ are updated independently for each node. In effect, this captures an assumption that that features observed at time $t$ are conditionally independent from the past relational graph connectivity given $\mathbf{z}^t$ and the history of observations $\mathbf{x}^{\prec t}$. In particular, it may not be needed to use messages from sender nodes as an input to the hidden state recursion. Accordingly, a model with fewer parameters may be obtained that may generalize better to unseen data and/or to prevent overfitting.

In order to predict interaction types based on representations $\mathbf{h}_j^t$ of the interacting objects, in the above concrete example, learnable functions $f_d^{\boldsymbol{\alpha}}$, $\varphi_d^{\boldsymbol{\alpha}}$, and $\varphi_\alpha$ are used that effectively implement a single-layer graph neural network to share information about past trajectories among nodes. A softmax $\sigma(\boldsymbol{\alpha}_{ij}^t)_k$ is used in this example to obtain a probability distribution of predicted interaction types, from which the interaction type $z_{ijk}^t$ may be sampled. Several variations to determine interaction types from representations of interacting objects, e.g., other types of graph neural networks, will be envisaged by the skilled person.

Having obtained an interaction type 411 between a first interacting object and a second interacting object, the corresponding object feature vector 404 of the first object may be predicted. Interestingly, as a particularly efficient way of conditioning the prediction on the interaction type, the decoder model may include respective propagation models, e.g., message passing functions, for the respective interaction types. The respective propagation models may be parametrized by respective parameters comprised in the parameters **DPAR** of the decoder model. In an operation **Fwp**, 420, respective propagation models may be applied to provide respective propagation data **PD**, 430, from second interacting objects to a first interacting object.

The propagation models may be applied based on previous object feature vectors of the interacting objects. For example, the propagation model may comprise a first input computed as a function of previous object feature vectors of the first interacting object and a second input computed as a function of previous object feature vectors of the second interacting object. Or, one or more previous object feature vectors may be used directly as an input to the propagation model. In various embodiments, the propagation models may be applied to representations $\mathbf{h}_j^t$ of the interacting objecting objects as discussed above. In more detail, application of a propagation model, e.g., a message function, to determine propagation data, e.g., a message, may be performed as follows. To compute propagation data from an $i$th interacting object to a $j$th interacting object, $\{(v_i, v_j)\}_{i \in \mathcal{J}_j}$, according to a $k$th interaction type 411, message functions $f_d^{\boldsymbol{\mu}_k}$ and $f_d^{\boldsymbol{\Sigma}_k}$ for that particular interaction type, may be applied as follows:

$$m_{i \to j, k}^{\boldsymbol{\mu}, t} = f_d^{\boldsymbol{\mu}_k}\big(\mathbf{h}_i^t, \mathbf{h}_j^t\big),$$

$$m_{i \to j, k}^{\Sigma, t} = f_d^{\Sigma_k}\big(\mathbf{h}_i^t, \mathbf{h}_j^t\big).$$

In this case, two message functions specific to interaction type 411 are used to compute respective parts of the propagation data, but there can also be just one message passing function, or more than two message passing functions.

Typically, multiple propagation models for different interaction types use the same model, e.g., neural network architecture, but with different parameters. It may be beneficial, however, to define one particular interaction type indicating an absence of interaction between two objects of the system. For this interaction type, the propagation model may compute propagation data based only on previous object feature vectors of the first interacting object, e.g., an interaction type $k = 0$ may be defined with unary message operations

$$m_{i\to j,0}^{\boldsymbol{\mu},t} = f_d^{\boldsymbol{\mu}_0}\big(\mathbf{h}_j^t\big)$$

$$m_{i\to j,0}^{\boldsymbol{\Sigma},t} = f_d^{\boldsymbol{\Sigma}_0}\big(\mathbf{h}_j^t\big)$$

where $m_{i\to j,0}^{\boldsymbol{\mu},t}$ and $m_{i\to j,0}^{\boldsymbol{\Sigma},t}$ denote messages from node $i$ to node $j$ under a connection of type $k = 0$. Including such an interaction type may be an efficient way to encourage the model to learn how to deal with non-interacting objects.

In order to predict object feature vector 404 of a first interacting object, propagation data **PD** of one or more second interacting objects may be aggregated into aggregated propagation data. Preferably, aggregation is performed according to a permutation-invariant operation to obtain a more universal model. For example, a sum operation may be used, e.g., aggregated propagation data $M_j^{\boldsymbol{\mu},t}$ and $M_j^{\boldsymbol{\Sigma},t}$ may be computed:

$$M_j^{\boldsymbol{\mu},t} = \sum_{i\in\mathcal{I}_j} \sum_{k\in\mathcal{K}} m_{i\to j,k}^{\boldsymbol{\mu},t} z_{ijk}^t$$

$$M_j^{\boldsymbol{\Sigma},t} = \sum_{i\in\mathcal{I}_j} \sum_{k\in\mathcal{K}} m_{i\to j,k}^{\boldsymbol{\Sigma},t} z_{ijk}^t$$

Again, in this particular example, the aggregated propagation data comprises two separate pieces of propagation data corresponding to the two message functions given above.

In order to obtain object feature vector 404 based on the propagation data **PD**, finally, in an operation **Pred**, 440, the object feature vector may be determined by using a prediction model parametrized by the set of parameters **DPAR**. The prediction model may be applied based on at least the determined propagation data, e.g., by aggregating the propagation data into aggregated propagation data as discussed above. For example, respective mappings $\varphi_d^{\boldsymbol{\mu}}$ and $\varphi_d^{\boldsymbol{\Sigma}}$ may be applied to the aggregated messages $M_j^{\boldsymbol{\mu},t}$ and $M_j^{\boldsymbol{\Sigma},t}$. To help training of the decoder model, the $f_d$ and $\varphi_d$ functions are preferably differentiable, e.g., the functions may be implemented using small neural networks.

The prediction model may directly provide predicted object feature vectors, but, as discussed elsewhere, it may be beneficial for the prediction model to instead provide parameters of a probability distribution from which the predicted object feature vector 404 can be sampled. For example, the above message passing functions may be used to compute a mean $\boldsymbol{\mu} \in \mathbb{R}^D$ and a covariance matrix $\boldsymbol{\Sigma} \in \mathbb{R}^{D\times D}$ of a normal distribution for sampling the object feature vector from. In other words, in the example above, respective mappings $\varphi_d^{\boldsymbol{\mu}}$ and $\varphi_d^{\boldsymbol{\Sigma}}$ may be applied to the aggregated messages $M_j^{\boldsymbol{\mu},t}$ and $M_j^{\boldsymbol{\Sigma},t}$ to obtain parameters $\mu$ and $\Sigma$ of a normal distribution.

In summary, by combining various options discussed above, a decoder model may be obtained that is defined via the following state transition:

$$p(\mathbf{x}^t|\mathbf{x}^{\tau<t},\mathbf{z}^t) = \prod_{j\in\mathcal{J}} p(\mathbf{x}_j^t|\mathbf{x}^{\tau<t},\mathbf{z}^t) = \prod_{j\in\mathcal{J}} \mathcal{N}\big(\mathbf{x}_j^t; \boldsymbol{\mu}_j^t, \boldsymbol{\Sigma}_j^t\big),$$

where:

$$\boldsymbol{\mu}_j^t(\mathbf{x}^{\tau<t},\mathbf{z}^t) = \mathbf{x}_j^{t-1} + \varphi_d^{\boldsymbol{\mu}}\Big(\sum_{i\in\mathcal{I}_j} \sum_{k\in\mathcal{K}} f_d^{\boldsymbol{\mu}_k}\big(\mathbf{h}_i^t,\mathbf{h}_j^t\big) z_{ijk}^t\Big),$$

$$\Sigma_j^t(\mathbf{x}^{\tau<t}, \mathbf{z}^t) = \varphi_d^{\Sigma}\left(\sum_{i\in\mathcal{I}_j}\sum_{k\in\mathcal{K}} f_d^{\Sigma_k}\left(\mathbf{h}_i^t, \mathbf{h}_j^t\right)z_{ijk}^t\right).$$

As highlighted in this example, one-hot encoded interaction types $\mathbf{z}_{ij}$ may effectively implement an attention mechanism, which controls the effect of node $i$ on *node j*. For example, if interaction type $k$ encodes absence of interaction, setting $z_{ijk} = 1$ may effectively block message passing from $i$ to $j$.

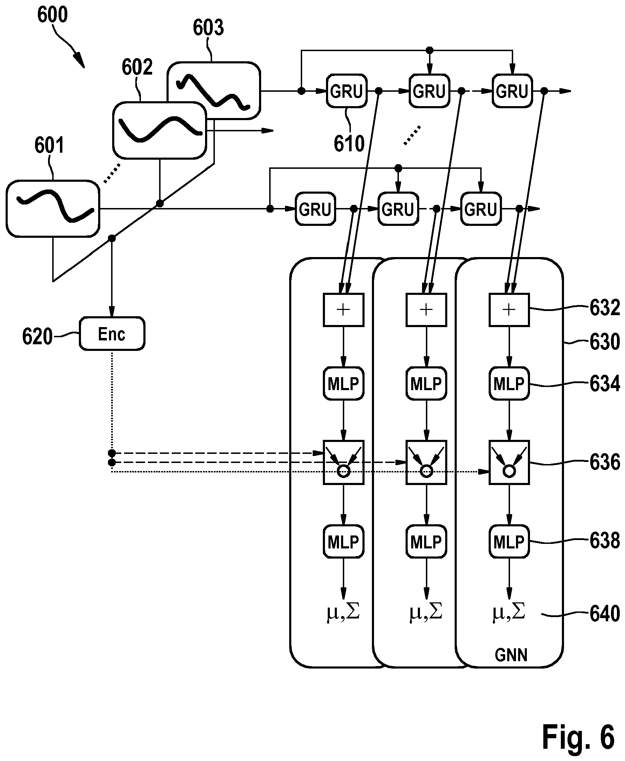

As a concrete example, **Fig. 6** schematically shows a possible neural network architecture 600 of a decoder model for use, e.g., in Fig. 1 and Fig. 5. As shown in the figure, neural network 600 may take as input observation data representing sequences 601, 602, 603 of observed object feature vectors of respective interacting objects. To predict an object feature vector of an interacting object, representations of the respective interacting objects may be determined by applying a recurrent model 610, in this case, a Gated Recurrent Unit (GRU), sequentially to previous object feature vectors of the respective interacting objects. Generally, any type of recurrent neural network cell, such as a GRU or LSTM, may be used.

A Graph Neural Network (GNN) 630 may be used to determine parameters of a probability distribution for predicting an object feature vector. The GNN may takes as input sequence embeddings of previous object feature vectors together with the current latent graph configuration, e.g. interaction types, and may outputs node-level graph embeddings providing the parameters of the probability distribution for predicting the object feature vector. Graph Neural Network 630 may be parametrized with various number of layers and various type of aggregation functions, although it is preferred to use aggregation functions that are permutation invariant and/or differentiable.

For example, GNN 630 may perform edge-wise concentration 632 in the sense that, to determine propagation data from a second interacting object to a first interacting object, representations of the interacting objects as computed by the GRU are used. The respective representations may be input to message passing functions $f_d^{\mu_k}$, $f_d^{\Sigma_k}$, 634, in this case, implemented as multi-layer perceptrons (MLPs). To use the propagation data to predict object feature vectors, message aggregation 636 may be used, e.g., propagation data of respective second interacting objects according to respective interaction types may be aggregated. The respective interaction types may be obtained, e.g., by applying an encoder model **Enc**, 620, as described herein; by applying a prior model as described herein; or as an input to the model to generate interactions of a specific type. The aggregated propagation data may be input to a prediction model 638, in this case, a multi-layer perceptron, to obtain parameters $\mu$, $\Sigma$ of a probability distribution from which a predicted object feature vector can be sampled.

**Fig. 5** shows a detailed yet non-limiting example of how to classify pairwise interactions between multiple physical objects into a set of multiple interaction types using an encoder model. The encoder model in this figure is parametrized by a set **EPAR**, 590, of parameters.

In this example, the encoder model is used to classify an interaction type 580 between a first interacting object and a second interacting object at a particular point in time $t = \tau$. The classification may use as input sequences of observed object feature vectors of multiple interacting objects. For example, shown in the figure are observed feature vectors at three moments in time: at $t = \tau - 1$, 500; at $t = \tau$, 503; and at $t = \tau + 1$, 506. The first interacting object has object feature vectors 501, 504, and 507; the second interacting object has object feature vectors 502, 505, and 508. The number of objects, interaction types, etc., are as discussed for Fig. 4. Although in this example a single interaction type 580 is classified, typically, interaction types may be determined for each interacting object at each observed point in time.

The encoder model may determine an interaction type 580 by letting a classification model **CI**, 570, output parameters governing the posterior distribution of the latent interaction types **Z**, conditioned on the observed data X, 500, 503, 506. Such a model may be interpreted as an approximation $q_\phi(\mathbf{Z}|\mathbf{X})$ to the true posterior $p(\mathbf{Z}|\mathbf{X})$ as obtained, e.g., by variational inference. The distribution may be evaluated as a product of T factors, where T equals the number of measured time points. Such a factor may correspond to a conditional probability density of interaction types at time $t$, e.g., $\mathbf{z}^t$, given observed data $\mathbf{X}$ and the interaction type history $\mathbf{z}^{\tau<t}$, e.g.:

$$q_\phi(\mathbf{Z}|\mathbf{X}) = q_\phi(\mathbf{z}^0|\mathbf{X})\prod_{t=1}^{T} q_\phi(\mathbf{z}^t|\mathbf{z}^{\tau<t}, \mathbf{X}).$$

Generally, such a distribution may correspond to a complete, probabilistic graph over the set of latent variables $\{\mathbf{z}^0,..., \mathbf{z}^T\}$. Conditional factors $q_\emptyset(\mathbf{z}^t|\mathbf{z}^{\tau<t},\mathbf{X})$ can be defined as functions

$$q_\phi^t: \mathcal{K}^{N(N-1)} \times \mathcal{K}^{tN(N-1)} \to [0,1];$$

however, this may result in an undesirably large number of inputs and parameters to be trained.

In various embodiments, however, the classification model may determine probabilities of respective interaction types for a pair of interacting objects based on hidden states of the interacting objects that can be computed relatively efficiently based on past observations, and optionally also based on further hidden states that are based on future observations. In particular, the hidden states and further hidden states may be computed using surrogate forward and backward message passing recursions. This way, the variational factors $q_\phi(\mathbf{z}_{ij}^t | \mathbf{z}^{\tau < t}, \mathbf{X})$ corresponding to the various time steps may be computed relatively efficiently from the relational history $\mathbf{z}^{\tau < t}$ and of $\mathbf{X}$, e.g., node trajectories from time 0 up to time T. Specifically, the approximate posterior may be modelled as:

$$q_\phi(\mathbf{z}^t | \mathbf{z}^{\tau < t}, \mathbf{X}) = \prod_{j \in \mathcal{J}} \prod_{i \in \mathcal{I}_j} q_\phi(\mathbf{z}_{ij}^t | \mathbf{z}^{\tau < t}, \mathbf{X}) = \prod_{j \in \mathcal{J}} \prod_{i \in \mathcal{I}_j} \prod_{k \in \mathcal{K}} \left(\sigma(\mathbf{l}_{ij}^t)_k\right)^{z_{ijk}^t},$$

where $\sigma(\cdot)$ denotes the softmax function:

$$\sigma(\mathbf{l})_k = \frac{\exp(l_k)}{\sum_{c=1}^{K} \exp(l_c)} .$$

To determine the inputs to classification model **CI**, a hidden state $\mathbf{f}_i^t$ may be computed for each interacting object for each past observation and, based on these past hidden states, for the current observation. A further hidden state $\mathbf{b}_i^t$ may optionally be computed for each interacting object for each future observation and, based on the further hidden states of the future observations, for the current observation. Classification model **CI** may use the hidden states and/or further hidden states as inputs. For example, to determine an interaction type 580 between an ith interacting object and a jth interacting object, classification **CI** may compute softmax arguments $\mathbf{l}_{ij}^t$ for probability distribution $q_\phi(\mathbf{z}^t | \mathbf{z}^{\tau < t}, \mathbf{X})$ above as a function of the hidden states $\mathbf{f}_i^t$, $\mathbf{f}_j^t$ of the interacting objects, and optionally also of the further hidden states $\mathbf{b}_i^t$, $\mathbf{b}_j^t$. E.g., a differentiable mapping $\varphi_e^{\mathbf{l}}: \mathbb{R}^{2(F+B)} \to \mathbb{R}^K$ parametrized by parameters **EPAR** may be used to determine

$$\mathbf{l}_{ij}^t = \varphi_e^{\mathbf{l}}\left(\left[\mathbf{f}_i^t; \mathbf{b}_i^t; \mathbf{f}_j^t; \mathbf{b}_j^t\right]\right).$$

At $t = 0$, for example, $\mathbf{l}_{ij}^0 = \varphi_e^{\mathbf{l},0}\left(\left[\mathbf{b}_i^0; \mathbf{b}_j^0\right]\right)$ may be used.

For example, the hidden state 541 at $t = \tau$ of a first interacting object may be determined in a forward recursion operator **Fwr**, 520, using hidden state 540 of the interacting object at $t = \tau - 1$. Effectively, forward recursion **Fwr** may filter information coming from the past. Accordingly, a hidden state 541 of an interacting object may be determined based on a previous hidden state 540 of the interacting object and current input data. For example, the hidden state may be computed using a recurrent neural network cell.

To determine this current input data, interestingly, information from other interacting objects may be propagated, similarly to the decoder model. Specifically, respective propagation models may be defined for respective interaction types by respective parameters comprised in set **EPAR.** To propagate data from a second interacting object to the first interacting object, the propagation model according to the previous interaction type 510 at previous point in time $t = \tau - 1$ may be used to determine propagation data **PD**, 530, that may then be used to update the hidden state. For example, propagation date **PD** from an ith interacting object to a jth interacting object with interaction type $k$, 510, may be computed using a propagation model $f_e^{\mathbf{f}_k}$ based on their previous hidden states $\mathbf{f}_i^{t-1}$, $\mathbf{f}_j^{t-1}$ as $f_e^{\mathbf{f}_k}\left(\mathbf{f}_i^{t-1}, \mathbf{f}_j^{t-1}\right)$. The propagation data **PD** of other interacting objects may be aggregated into aggregated propagation data $M_j^{\mathbf{f},t-1}$ for computing the hidden state, e.g., the aggregated propagation data for a jth interacting object may be computed as:

$$M_j^{\mathbf{f},t-1}(\mathbf{z}^{t-1}, \mathbf{f}^{t-1}) = \sum_{i \in \mathcal{I}_j} \sum_{k \in \mathcal{K}} f_e^{\mathbf{f}_k}\left(\mathbf{f}_i^{t-1}, \mathbf{f}_j^{t-1}\right) z_{ijk}^{t-1}.$$

Instead of or in addition to using the previous hidden states, the propagation model can take the current observed feature vectors as input, e.g.,

$$M_j^{\mathbf{f},t-1}(\mathbf{z}^{t-1},\mathbf{x}^t) = \sum_{i\in\mathcal{J}_j}\sum_{k\in\mathcal{K}} f_e^{\mathbf{f}_k}(\mathbf{x}_i^t,\mathbf{x}_j^t)z_{ijk}^{t-1} \ .$$

The aggregated propagation data $M_j^{\mathbf{f},t-1}$ may be used, possibly in combination with the current observed object feature vector, as current input data to compute the hidden state, e.g.,

$$\mathbf{f}_j^t = \rho_e^f\big(\mathbf{f}_j^{t-1},\big[\mathbf{x}_j^t;M_j^{\mathbf{f},t-1}\big]\big),$$

where $[\cdot;\cdot]$ indicates vector concatenation. Initialization may be performed independently for each node, for instance by applying a mapping $\varphi_e^{\mathbf{f},0}\colon \mathbb{R}^D \to \mathbb{R}^F$ to the first observed feature $\mathbf{x}_j^0$

$$\mathbf{f}_j^0 = \varphi_e^{\mathbf{f},0}\big(\mathbf{x}_j^0\big).$$

For example, recursion $\rho_e^f$ used to determine the hidden state may be implemented with a GRU or LSTM network. Propagation models $f_e^{\mathbf{f}_k}$ can be implemented by small feedforward neural networks, for example.

As discussed, apart from hidden state 541, also a further hidden state 561 may be used to determine interaction type 580. In a backward recursion operation **Bwr**, 550, further hidden state 561, e.g., at time $t=\tau$, of an interacting object may be determined based on at least an immediately following further hidden state 560, e.g., at time $t=\tau+1$. Thereby, effectively, information from the future may be smoothed for use to determine the interaction type. The further hidden state an interacting object, e.g., at the last observed time point, may be initialized by

$$\mathbf{b}_j^T = \varphi_e^{\mathbf{b},T}(\mathbf{x}_j^T),$$

where $\varphi_e^{\mathbf{b},T}$ is a differentiable mapping from $\mathbb{R}^D$ to $\mathbb{R}^B$. At other points in time, a further hidden state 561 may be based on a next further hidden state 560 by computing a recurrent model $\rho_e^b$, e.g., a GRU or LTSM network;

$$\mathbf{b}_j^{t-1} = \rho_e^b\big(\mathbf{b}_j^t,\big[\mathbf{x}_j^{t-1};M_j^{\mathbf{b},t-1}\big]\big).$$

For example, inputs to the prediction model may include the observed feature vector $\mathbf{x}_j^{t-1}$, 504 at that point in time, and/or aggregated propagation data $M_j^{\mathbf{b},t-1}$ from other interacting objects, e.g.,

$$M_j^{\mathbf{b},t-1} = \sum_{i\in\mathcal{J}_j} f_e^{\mathbf{b}}\big(\mathbf{x}_i^{t-1},\mathbf{x}_j^{t-1}\big).$$

A common propagation model $f_e^{\mathbf{b}}$ may be used, with parameters comprised in encoding model parameters **EPAR.**

As a concrete example, **Fig. 7** schematically shows a neural network architecture 700 for use as a decoder model, e.g., in Fig. 2 and Fig. 6. As shown in the figure, neural network 700 may take as input observation data representing sequences 701, 702, 703 of observed object feature vectors of respective interacting objects.

To determine an interaction type between a first and second interacting object, a forward pass 730 may be made in which hidden states of respective interacting objects are determined, and optionally, also a backward pass 780 may be made in which further hidden states of respective interacting objects are determined.

As an input to the forward pass 730, a graph neural network (GNN) 710 may be used to determine aggregated propagation data, e.g., $M_j^{\mathbf{f},t-1}$, for an interacting object at a particular point in time. The aggregated propagation data may aggregate propagation data from second interacting objects to the first interacting object determined by applying a propagation model, e.g., $f_e^{\mathbf{f}_k}$, selected according to the interaction type, e.g., $z_{ijk}^{t-1}$, between the interacting objects. The aggregated propagation data may be concatenated, 720, with current observation data, and input into a recurrent model, in this case a GRU 731. Applying the GRUs at respective time points may result in a hidden state, e.g., $\mathbf{f}_i^t$ at the time point for which the interaction type is to be determined. Accordingly, hidden states, e.g., $\mathbf{f}_i^t$, $\mathbf{f}_j^t$, may be determined for the two interacting objects between which the interaction type is to be determined.

In the backward pass 780, further hidden states, e.g., $\mathbf{b}_i^t$, $\mathbf{b}_j^t$, of the interacting objects may be based on immediately following further hidden states of the interacting objects by again applying a recurrent model, in this case a GRU 781.

The computed hidden states and optionally also the further hidden states may then be subject to edge-wise concatenation 740. E.g., to determine an interaction type between a first and second interacting object, the hidden and further hidden states may be concatenated, e.g., $\left[\mathbf{f}_i^t; \mathbf{b}_i^t; \mathbf{f}_j^t; \mathbf{b}_j^t\right]$. A classification model 750, in this case a multi-layer perceptron, may be applied to get softmax inputs, e.g., $\mathbf{l}_{ij}^t = \varphi_e^{\mathbf{l}}\left(\left[\mathbf{f}_i^t; \mathbf{b}_i^t; \mathbf{f}_j^t; \mathbf{b}_j^t\right]\right)$. Finally, by applying softmax function 760, probabilities 770 of respective relationship types for the first and second interacting objects may be obtained, from which a predicted relationship type may be obtained via sampling.

Returning to **Fig. 3,** the training of encoder and decoder models, as discussed for example with respect to Figs. 4-7, is now further elaborated upon. To train the encoder and decoder models, a stochastic approach may be applied to simultaneously solve inference and learning. In particular, a variational lower bound on the marginal likelihood of the training data 050 with respect to the model parameters may be optimized. These parameters may comprise parameters 041 of the decoder model and parameters 042 of the encoder model. In various embodiments, a stochastic estimate of the variational lower bound $\mathcal{L}_{p(\mathbf{X})}[q_\phi(\mathbf{Z}|\mathbf{X})]$ may be optimized, with $q_\varnothing(\mathbf{Z}|\mathbf{X})$ being the variational approximating the posterior on the latent variables applied in the encoder model, parameterized by $\phi$, and $p(\mathbf{X})$ denoting the marginal likelihood, e.g.,. $p(\mathbf{X}) = \int p(\mathbf{X},\mathbf{Z})\mathrm{d}\mathbf{Z}$.

In particular, as discussed, training data 050 may represent a plurality of training instances, wherein an instance comprises sequences of observed object feature vectors of multiple interacting objects. For example, at least 1000 or at least 10000 training instances may be available. To train the models, a training instance $\boldsymbol{X} = \{\boldsymbol{x}_1, ..., \boldsymbol{x}_N\}$ may be obtained, e.g., randomly selected from training data 050, and processed by the encoder model to obtain a finite set of samples drawn from a variational posterior distribution over the interaction types. Such a sample $\boldsymbol{Z}$ may provide interaction types $\boldsymbol{z}_{ij}$ for sets of interacting objects $(i,j)$. The samples returned by the encoder model may then be processed by the decoder model to obtain parameters of the conditional probability distribution $p(\boldsymbol{X}|\boldsymbol{Z})$ for respective samples $\boldsymbol{Z}$. The parameter values computed by the decoder model may be used to evaluate a reconstruction error loss, e.g., an expected negative log-likelihood of the training data.

To obtain a full variational lower bound loss, it is possible to include a regularizing term to the reconstruction error. The regularizing term may evaluate a divergence, e.g., a Kullback-Leibler divergence, between the determined sequences of pairwise interaction types, e.g., their variational posterior distribution, and predicted interaction types obtained by applying the decoder model, e.g., the prior model.

The encoder and decoder models may be trained by minimizing this loss function with respect to trainable parameters, e.g. neural network weights of the encoder model and decoder model. The trainable parameters may also include parameters of the prior model that is used to predict interaction types. For example, respective training instances or batches of training instances may be selected, with the parameters being iteratively refined in the process, using techniques for gradient-based optimization that are known per se. As is known, such training may be heuristic and/or arrive at a local optimum.

For completeness, a detailed example of a training procedure is now given, with the understanding that a skilled person can adapt it to various alternatives discussed above. In particular, a decomposition of the log marginal likelihood is now given, from which an expression $\mathcal{L}_{p(\mathbf{X})}$ may be derived. In particular, it is recalled that:

$$\log p(\mathbf{X}) \quad = \int q_\phi(\mathbf{Z}|\mathbf{X})\log p(\mathbf{X})\mathrm{d}\mathbf{Z} = \int q_\phi(\mathbf{Z}|\mathbf{X})\log\left(\frac{p(\mathbf{X},\mathbf{Z})}{q_\phi(\mathbf{Z}|\mathbf{X})}\frac{q_\phi(\mathbf{Z}|\mathbf{X})}{p(\mathbf{Z}|\mathbf{X})}\right)\mathrm{d}\mathbf{Z}$$

$$= \int q_\phi(\mathbf{Z}|\mathbf{X})\log\left(\frac{p(\mathbf{X},\mathbf{Z})}{q_\phi(\mathbf{Z}|\mathbf{X})}\right)\mathrm{d}\mathbf{Z} + \mathrm{D}_{\mathrm{KL}}(q_\phi(\mathbf{Z}|\mathbf{X})||p(\mathbf{Z}|\mathbf{X})).$$

Since the Kullback-Leibler divergence $\mathrm{D}_{\mathrm{KL}}(q||p)$ is always non-negative it may follow that

$$\log p(\mathbf{X}) \geq \int q_\phi(\mathbf{Z}|\mathbf{X})\log\left(\frac{p(\mathbf{X},\mathbf{Z})}{q_\phi(\mathbf{Z}|\mathbf{X})}\right)\mathrm{d}\mathbf{Z} = \mathcal{L}_{p(\mathbf{X})}\big[q_\phi(\mathbf{Z}|\mathbf{X})\big].$$

It may also be noted that the variational lower bound can be further decomposed as

$$\mathcal{L}_{p(\mathbf{X})}[q_\phi(\mathbf{Z}|\mathbf{X})] \quad = \mathbb{E}_{q_\phi(\mathbf{Z}|\mathbf{X})}[\log p(\mathbf{X},\mathbf{Z})] + H_{q_\phi(\mathbf{Z}|\mathbf{X})}(\mathbf{Z})$$

$$= \mathbb{E}_{q_\phi(\mathbf{Z}|\mathbf{X})}[\log p(\mathbf{X}|\mathbf{Z})] - \mathrm{D}_{\mathrm{KL}}(q_\phi(\mathbf{Z}|\mathbf{X})||p(\mathbf{Z})))$$

$$= -\mathcal{E}_{p(\mathbf{X}|\mathbf{Z})}[q_\phi(\mathbf{Z}|\mathbf{X})] + \mathcal{R}_{p(\mathbf{Z})}[q_\phi(\mathbf{Z}|\mathbf{X})] \; ,$$

where the functional

$$\mathcal{E}_{p(\mathbf{X}|\mathbf{Z})}[q_\phi(\mathbf{Z}|\mathbf{X})] = -\mathbb{E}_{q_\phi(\mathbf{Z}|\mathbf{X})}[\log p(\mathbf{X}|\mathbf{Z})]$$

may act as reconstruction error when sampling from the conditional distribution $p(\mathbf{X}|\mathbf{Z})$, given samples drawn from the approximated posterior, while

$$\mathcal{R}_{p(\mathbf{Z})}[q_\phi(\mathbf{Z}|\mathbf{X})] = -\mathrm{D}_{\mathrm{KL}}(q_\phi(\mathbf{Z}|\mathbf{X})||p(\mathbf{Z}))$$

may be used to regularize the learning objective by penalizing variational distributions that significantly diverge from p(Z).

Known stochastic variational inference approaches may be used for simultaneous learning of the generative model, e.g., the decoder and prior, and probabilistic inference by optimizing $\mathcal{L}_{p(\mathbf{X})}[q_\phi(\mathbf{Z}|\mathbf{X})]$ with respect to the parameters of $p(\mathbf{X}|\mathbf{Z})$ as well as $\phi$.

An expression for $\mathcal{L}_{p(\mathbf{X})}\big[q_\phi(\mathbf{Z}|\mathbf{X})\big]$ can be derived as follows. The reconstruction error term can be evaluated by substitution to obtain:

$$\mathcal{E} = \quad -\mathbb{E}_\phi\big[\log p(\mathbf{x}^0|\mathbf{z}^0) + \textstyle\sum_{t=1}^{T} \log p(\mathbf{x}^t|\mathbf{x}^{\tau<t},\mathbf{z}^t)\big]$$

$$= \quad \textstyle\sum_{t=0}^{T} \sum_{j\in\mathcal{J}} \frac{1}{2}\mathbb{E}_\phi\left[\big(\mathbf{x}_t - \boldsymbol{\mu}_j^t(\mathbf{z}^t)\big)^{\mathrm{T}}\big(\boldsymbol{\Sigma}_j^t(\mathbf{z}^t)\big)^{-1}\big(\mathbf{x}_t - \boldsymbol{\mu}_j^t(\mathbf{z}^t)\big)\right]$$

$$+ \textstyle\sum_{t=0}^{T} \sum_{j\in\mathcal{J}} \frac{1}{2}\mathbb{E}_\phi\big[\log(|\boldsymbol{\Sigma}_j^t(\mathbf{z}^t)|)\big] + \mathrm{const} \; ,$$

where $\mathbb{E}_\phi$ is short for $\mathbb{E}_{q_\phi(\mathbf{Z}|\mathbf{X})}$. Similarly, the regularizing term may be determined as:

$$\mathcal{R} = \mathbb{E}_\phi\left[\log\left(\frac{p(\mathbf{z}_0)}{q_\phi(\mathbf{z}^0|\mathbf{X})}\right)\right] + \sum_{t=1}^{T}\mathbb{E}_\phi\left[\log\left(\frac{p(\mathbf{z}^t|\mathbf{z}^{t-1})}{q_\phi(\mathbf{z}^t|\mathbf{z}^{\tau<t},\mathbf{X})}\right)\right]$$

$$= \mathbb{E}_\phi\left[\sum_{j\in\mathcal{J}}\sum_{i\in\mathcal{I}_j}\sum_{k\in\mathcal{K}} z_{ijk}^0\left(\log\frac{\pi_k^0}{Z^0} - l_{ijk}^0 - \log\sum_{c\in\mathcal{K}}\exp\!\left(l_{ijc}^0\right)\right)\right]$$

$$+ \sum_{t=1}^{T}\mathbb{E}_\phi\left[\sum_{j\in\mathcal{J}}\sum_{i\in\mathcal{I}_j}\sum_{k\in\mathcal{K}} z_{ijk}^t\left(\left(\sum_{k'\in\mathcal{K}} z_{ijk'}^{t-1}\log\frac{\pi_k^{k'}}{Z^{k'}}\right) - l_{ijk}^t - \log\sum_{c\in\mathcal{K}}\exp\!\left(l_{ijc}^t\right)\right)\right].$$

To improve efficiency of the training, in various embodiments, a stochastic estimation approach may be used to optimize a Monte Carlo estimator of the variational learning objective.

In order to make training more amenable to gradient-based optimization, in various embodiments, a continuous relaxation of the learning objective may be used. For example, discrete interaction types in the learning objective may be replaced by continuous approximations, e.g., using the Gumbel-Softmax distribution. Specifically, the discrete, one-hot encoded random variables $\mathbf{z}_{ij}^t$ may be replaced with continuous random variables $\boldsymbol{\zeta}_{ij}^t \in \Delta^{k-1}$, where $\Delta^{k-1}$ is the standard simplex defined as $\Delta^{k-1} = \{\boldsymbol{\zeta}\in\mathbb{R}^K\,|\,\sum_{k=1}^K \zeta_k = 1, \zeta_k \geq 0\}$. Each of the variational categorical factors

$$q_\phi(\mathbf{z}_{ij}^t|\mathbf{z}^{\tau<t},\mathbf{X}) = \prod_{k\in\mathcal{K}}\left(\sigma(\mathbf{l}_{ij}^t)_k\right)^{z_{ijk}^t},$$

may be replaced by a continuous random variable, e.g., approximated with a continuous Gumbel-Softmax distribution

$$q_\phi\!\left(\boldsymbol{\zeta}_{ij}^t|\boldsymbol{\zeta}^{\tau<t},\mathbf{X}\right) = \mathcal{G}\!\left(\boldsymbol{\zeta}_{ij}^t; \exp\!\left(\mathbf{l}_{ij}^t\right),\lambda_e\right).$$

For example, for a Gumbel-Softmax distributed variable $\zeta$ with location parameters $\boldsymbol{\alpha} = \{\alpha_k\}_{k=1}^K$ and temperature parameter $\lambda$, the following density may be used:

$$\mathcal{G}(\boldsymbol{\zeta};\boldsymbol{\alpha},\lambda) = \frac{(K-1)!}{\lambda^{1-K}}\left(\sum_{k\in\mathcal{K}}\alpha_k/\zeta_k^{\lambda}\right)^{-K}\prod_{k\in\mathcal{K}}\alpha_k/\zeta_k^{\lambda+1}.$$

The prior term p(Z) may be relaxed in an analogous way, e.g.:

$$p(\boldsymbol{\zeta}^0) = \prod_{j\in\mathcal{J}}\prod_{i\in\mathcal{I}_j}\mathcal{G}\!\left(\boldsymbol{\zeta}_{ij}^0;\boldsymbol{\pi}^0,\lambda_d\right),$$

$$p(\boldsymbol{\zeta}^t|\boldsymbol{\zeta}^{t-1}) = \prod_{j\in\mathcal{J}}\prod_{i\in\mathcal{I}_j}\mathcal{G}\!\left(\boldsymbol{\zeta}_{ij}^t;\boldsymbol{\Pi}\boldsymbol{\zeta}_{ij}^{t-1},\lambda_d\right),$$

where $\Pi = [\pi^1 \ldots \pi^K]$ is a matrix with columns

$$\{\boldsymbol{\pi}^k\}_{k\in\mathcal{K}}.$$

It is noted that, in the limit of $\lambda_d \to 0$, this latter expression may be equivalent to the expression given for $p(\mathbf{z}^t|\mathbf{z}^{t-1})$ earlier. Under a continuous relaxation, the location parameters of the Gumbel-Softmax prior may be computed as a weighted average of

$$\{\boldsymbol{\pi}^k\}_{k\in\mathcal{K}},$$

with weights given by the elements of $\boldsymbol{\zeta}_{ij}^{t-1}$.

In various embodiments, low-variance, stochastic estimates of the gradient of $\mathcal{L}_{p(\mathbf{X})}\big[q_\phi(\mathbf{Z}|\mathbf{X})\big]$ may be obtained, as is desirable for applying stochastic variational inference, by using the reparameterization trick, e.g., sampling from $\mathcal{G}(\boldsymbol{\zeta};\boldsymbol{\alpha},\lambda)$ distributions may be performed using

$$\zeta_k = \frac{\exp\big((\log\alpha_k + G_k)/\lambda\big)}{\sum_{k=1}^K \exp\big((\log\alpha_k + G_k)/\lambda\big)},$$

where $G_k$ are i.i.d. samples and $G_k \sim$ Gumbel(0,1).

Combining the above may give the following the reconstruction error objective:

$$\begin{aligned}
\mathcal{E} = \ & \sum_{t=0}^{T} \sum_{j\in\mathcal{J}} \tfrac{1}{2} \mathbb{E}_{p(\mathbf{G}^t)}\Big[\big(\mathbf{x}_t - \boldsymbol{\mu}_j^t(\phi,\mathbf{G}^t)\big)^{\mathrm{T}} \big(\boldsymbol{\Sigma}_j^t(\phi,\mathbf{G}^t)\big)^{-1} \big(\mathbf{x}_t - \boldsymbol{\mu}_j^t(\phi,\mathbf{G}^t)\big)\Big] \\
& + \sum_{t=0}^{T} \sum_{j\in\mathcal{J}} \tfrac{1}{2} \mathbb{E}_{p(\mathbf{G}^t)}\big[\log(|\boldsymbol{\Sigma}_j^t(\phi,\mathbf{G}^t)|)\big] + \mathrm{const}\ ,
\end{aligned}$$

where $\mathbf{G}^t$ is a set *of KN(N* - 1) i.i.d. samples drawn from the standard Gumbel distribution.

The following regularization term may be obtained:

$$\begin{aligned}
\mathcal{R} = \ & \sum_{j\in\mathcal{J}} \sum_{i\in\mathcal{J}_j} \Big(\mathbb{E}_{p*\mathbf{G}^0}\Big[\sum_{k\in\mathcal{K}} \log\pi_k^0 - (\lambda_d + 1)\log\zeta_{ijk}^0 - \log\sum_{c\in\mathcal{K}} \pi_k^0\big(\zeta_{ijk}^0\big)^{-\lambda_d}\Big] \\
& - \mathbb{E}_{p*\mathbf{G}^0}\Big[\sum_{k\in\mathcal{K}} l_{ijk}^0 - (\lambda_e + 1)\log\zeta_{ijk}^0 - \log\sum_{c\in\mathcal{K}} \exp\big(l_{ijk}^0\big)\big(\zeta_{ijk}^0\big)^{-\lambda_e}\Big] \\
& - \sum_{t=1}^{T} \big(\mathbb{E}_{p*\mathbf{G}^{t,t-1}}\big[\sum_{k\in\mathcal{K}} l_{ijk}^t - (\lambda_e + 1)\log\zeta_{ijk}^t - \log\sum_{c\in\mathcal{K}} \exp\big(l_{ijc}^t\big)\big(\zeta_{ijk}^t\big)^{-\lambda_e} \\
& + \sum_{k\in\mathcal{K}} \log\big(\Pi\boldsymbol{\zeta}_{ij}^{t-1}\big)_k - (\lambda_d + 1)\log\zeta_{ijk}^t - \log\sum_{c\in\mathcal{K}} \big(\Pi\boldsymbol{\zeta}_{ij}^{t-1}\big)_c\big(\zeta_{ijk}^t\big)^{-\lambda_d}\big]\big)\big) \\
& + \mathrm{const}\ ,
\end{aligned}$$

where, for the sake of brevity, the deterministic dependency of the latent variables $\boldsymbol{\zeta}_{ij}^t$ on $\phi$ and $\mathbf{G}^t$ is implicit. An analogous relaxation procedure may be used for the priors depending on representations of interacting objects by setting

$$p(\mathbf{z}_{ij}^t | \mathbf{x}^{\tau < t}) = \mathcal{G}\big(\boldsymbol{\zeta}_{ij}^t; \exp\big(\boldsymbol{\alpha}_{ij}^t\big), \lambda_d\big).$$

**Fig. 8** shows a block-diagram of computer-implemented method 800 of predicting object feature vectors of multiple interacting physical objects. The method 800 may correspond to an operation of the system 100 of Fig. 1. However, this is not a limitation, in that the method 800 may also be performed using another system, apparatus or device.

The method 800 may comprise, in an operation titled "ACCESSING DECODER, OBSERVATIONS", accessing 810 decoder model data representing parameters of a prediction model and of a set of propagation models for a set of multiple interaction types, and observation data representing sequences of observed object feature vectors of the multiple interacting objects.

The method 800 may comprise determining sequences of predicted object feature vectors for the multiple interacting objects extending the sequences of observed object feature vectors. To determine these sequences, method 800 may comprise, in an operation titled "OBTAINING INTERACTION TYPES", obtaining 820, for a sequence of object feature vectors to be predicted of a first interacting object, a sequence of corresponding pairwise interaction types between the first interacting object and a second interacting object.

To determine these sequences, method 800 may further comprise, in an operation titled "PREDICTING OBJECT FEATURE VECTOR", predicting 830 an object feature vector of the first interacting object. To predict the object feature vector, method 800 may comprise, in an operation titled "SELECTING PROPAGATION MODEL", selecting 832 a propagation model from the set of propagation models according to the pairwise interaction type for the object feature vector. To predict the object feature vector, method 800 may further comprise, in an operation titled "DETERMINING PROPAGATION DATA", determining 834 propagation data from the second interacting object to the first interacting object by applying the selected propagation model based on previous object feature vectors of the first and the second interacting object. To predict the object feature vector, method 800 may comprise, in an operation titled "PREDICTING OBJECT FEATURE VECTOR", predicting 836 the object feature vector using the prediction model based on at least the determined propagation data.

**Fig. 9** shows a block-diagram of a computer-implemented method 900 of classifying pairwise interactions between multiple physical objects into a set of multiple interaction types. The method 900 may correspond to an operation of the system 200 of Fig. 2. However, this is not a limitation, in that the method 900 may also be performed using another system, apparatus or device.

Method 900 may comprise, in an operation titled "ACCESSING ENCODER, OBSERVATIONS", accessing 910 encoder model data representing parameters of a classification model and of a set of propagation models for the set of multiple interaction types and observation data representing sequences of observed object feature vectors of the multiple interacting objects. Method 900 may further comprise determining sequences of pairwise interaction types for pairs of interacting objects corresponding to the observation data. This determining may comprise determining sequences of hidden states of the interacting objects corresponding to the observation data.

To determine an interaction type between a first and a second interacting object, method 900 may comprise, in an operation titled "SELECTING PROPAGATION MODEL", selecting 920 a propagation model from the set of propagation models according to an immediately preceding interaction type between the first and the second interacting object. To determine an interaction type between a first and a second interacting object, method 900 may further comprise, in an operation titled "DETERMINING PROPAGATION DATA", determining 930 propagation data from the second interacting object to the first interacting object by applying the selected propagation model based on data of the first and the second interacting object. To determine an interaction type between a first and a second interacting object, method 900 may further comprise, in an operation titled "DETERMINING HIDDEN STATE", determining 940 a hidden state of the first interacting object based on at least a previous hidden state of the first interacting object and the determined propagation data. To determine an interaction type between a first and a second interacting object, method 900 may further comprise, in an operation titled "DETERMINING INTERACTION TPYE", determining 950 the interaction type using the classification model based on at least the hidden states of the first and the second interacting object.

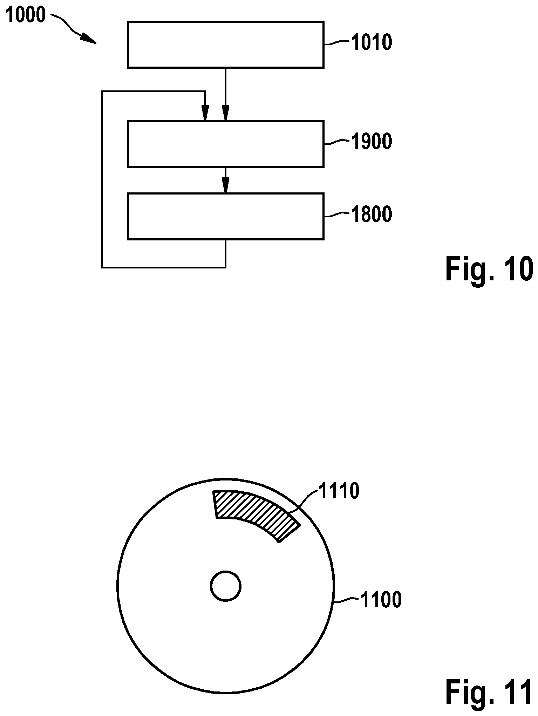

**Fig. 10** shows a block-diagram of a computer-implemented method 1000 of training an encoder model for classifying pairwise interactions between multiple physical objects into a set of multiple interaction types and a decoder model for predicting object feature vectors of multiple interacting physical objects. The method 1000 may correspond to an operation of the system 300 of Fig. 3. However, this is not a limitation, in that the method 1000 may also be performed using another system, apparatus or device.

Method 1000 may comprise, in an operation titled "ACCESSING DECODER, ENCODER, TRAINING DATA", accessing 1010 decoder model data representing parameters of the decoder model; encoder model data representing parameters of the encoder model; and training data representing a plurality of training instances.

Method 1000 may comprise optimizing the parameters of the decoder model and the encoder model. To optimize the parameters, method 1000 may comprise, in an operation titled "SELECTING TRAINING INSTANCE", selecting 1020 at least one training instance from the training data. The training instance may comprise sequences of observed object feature vectors of multiple interacting objects. To optimize the parameters, method 1000 may further comprise, in an operation titled "DETERMINING PAIRWISE INTERACTION TYPES", determining 1900 sequences of pairwise interaction types for pairs of the interacting objects, for example using method 900 of Fig. 9, based on the encoder model data. To optimize the parameters, method 1000 may further comprise, in an operation titled "MINIMIZING PREDICTION LOSS", minimizing 1800 a loss of recovering an observed object feature vector by predicting the object feature vector, for example by adapting method 800 of Fig. 8, based on the determined sequences of pairwise interaction types and the decoder model data.

It will be appreciated that, in general, the operations of method 800 of Fig. 8, method 900 of Fig. 9, and method 1000 of Fig. 10 may be performed in any suitable order, e.g., consecutively, simultaneously, or a combination thereof, subject to, where applicable, a particular order being necessitated, e.g., by input/output relations.

The method(s) may be implemented on a computer as a computer implemented method, as dedicated hardware, or as a combination of both. As also illustrated in **Fig. 11** instructions for the computer, e.g., executable code, may be stored on a computer readable medium 1100, e.g., in the form of a series 1110 of machine-readable physical marks and/or as a series of elements having different electrical, e.g., magnetic, or optical properties or values. The executable code may be stored in a transitory or non-transitory manner. Examples of computer readable mediums include memory devices, optical storage devices, integrated circuits, servers, online software, etc. Fig. 11 shows an optical disc 1100. Alternatively, the computer readable medium 1100 may comprise transitory or non-transitory data 1110 representing decoder model data for predicting object feature vectors of multiple interacting physical objects as described herein; and/or encoder model data for classifying pairwise interactions between multiple physical objects into a set of multiple interaction types as described herein.

Examples, embodiments or optional features, whether indicated as non-limiting or not, are not to be understood as limiting the invention as claimed.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or stages other than those stated in a claim. The article "a" or "an" preceding an element does not exclude the presence of a plurality of such elements. Expressions such as "at least one of" when preceding a list or group of elements represent a selection of all or of any subset of elements from the list or group. For example, the expression, "at least one of A, B, and C" should be understood as including only A, only B, only C, both A and B, both A and C, both B and C, or all of A, B, and C. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

**Claims**

1. A system (100) for predicting object feature vectors of multiple interacting physical objects, the system comprising:

   - a data interface (120) configured to access:

     - observation data (030) representing sequences of observed object feature vectors of the multiple interacting objects;
     - decoder model data (041) representing parameters of a prediction model and of a set of propagation models for a set of multiple interaction types;

   - a processor subsystem (140) configured to determine sequences of predicted object feature vectors for the multiple interacting objects extending the sequences of observed object feature vectors by:

     - obtaining, for a sequence of object feature vectors to be predicted of a first interacting object, a sequence of corresponding pairwise interaction types between the first interacting object and a second interacting object;
     - predicting an object feature vector of the first interacting object by:

       - selecting a propagation model from the set of propagation models according to the pairwise interaction type for the object feature vector;
       - determining propagation data from the second interacting object to the first interacting object by applying the selected propagation model based on previous object feature vectors of the first and the second interacting object;
       - predicting the object feature vector using the prediction model based on at least the determined propagation data.

2. System (100) according to claim 1, wherein the object feature vector of the first interacting object comprises one or more of a position, a velocity, and an acceleration of the first interacting object.

3. System (100) according to claim 1 or 2, wherein the decoder model data further represents a set of transition probabilities of previous pairwise interaction types being succeeded by current pairwise interaction types, the processor subsystem (140) being configured to predict the pairwise interaction type between the first and the second interacting object based on a previous pairwise interaction type between the first and the second interacting object by sampling the pairwise interaction type according to the set of transition probabilities.

4. System (100) according to any one of the preceding claims, wherein the processor subsystem (140) is configured to predict the pairwise interaction type between the first and the second interacting object by determining respective representations of interacting objects based on previous object feature vectors of the respective interacting objects, and determining the pairwise interaction type based on the representations of the interacting objects.

5. System (100) according to claim 4, wherein the decoder model data further represents parameters of a recurrent model, the processor subsystem (140) being configured to determine a representation of an interacting object by applying the recurrent model sequentially to previous object feature vectors of the interacting object.

6. System (100) according to claim 4, wherein the processor subsystem (140) is configured to determine the representations of the interacting objects from immediately preceding object feature vectors of the respective interacting agents.

7. System (100) according to any one of the preceding claims, wherein the processor subsystem (140) is configured to predict the object feature vector using the prediction model by applying the prediction model based on at least the determined propagation data to determine parameters of a probability distribution for predicting the object feature vector, and sampling the object feature vector from the probability distribution.

8. A computer-implemented method (800) of predicting object feature vectors of multiple interacting physical objects, the method comprising:

 - accessing (810):

  - decoder model data representing parameters of a prediction model and of a set of propagation models for a set of multiple interaction types;
  - observation data representing sequences of observed object feature vectors of the multiple interacting objects;

 - determining sequences of predicted object feature vectors for the multiple interacting objects extending the sequences of observed object feature vectors by:

  - obtaining (820), for a sequence of object feature vectors to be predicted of a first interacting object, a sequence of corresponding pairwise interaction types between the first interacting object and a second interacting object;
  - predicting (830) an object feature vector of the first interacting object by:

   - selecting (832) a propagation model from the set of propagation models according to the pairwise interaction type for the object feature vector;
   - determining (834) propagation data from the second interacting object to the first interacting object by applying the selected propagation model based on previous object feature vectors of the first and the second interacting object;
   - predicting (836) the object feature vector using the prediction model based on at least the determined propagation data.

9. Method (800) according to claim 8, further comprising training a further machine learning model using the predicted objected feature vectors as training and/or test data.

10. A system (200) for classifying pairwise interactions between multiple physical objects into a set of multiple interaction types, the system comprising:

 - a data interface (220) configured to access:

  - observation data (030) representing sequences of observed object feature vectors of the multiple interacting objects;
  - encoder model data (042) representing parameters of a classification model and of a set of propagation models for the set of multiple interaction types;

 - a processor subsystem (240) configured to determine sequences of pairwise interaction types for pairs of interacting objects corresponding to the observation data, comprising determining sequences of hidden states of the interacting objects corresponding to the observation data, the processor subsystem being configured to determine an interaction type between a first and a second interacting object by:

- selecting a propagation model from the set of propagation models according to an immediately preceding interaction type between the first and the second interacting object;
- determining propagation data from the second interacting object to the first interacting object by applying the selected propagation model based on data of the first and the second interacting object;
- determining a hidden state of the first interacting object based on at least a previous hidden state of the first interacting object and the determined propagation data;
- determining the interaction type using the classification model based on at least the hidden states of the first and the second interacting object.

11. System (200) according to claim 10, wherein determining the sequences of pairwise interaction types further comprises determining sequences of further hidden states of the interacting objects, the processor subsystem (240) being configured to determine a further hidden state of the first interacting object based on at least an immediately following further hidden state of the first interacting object, and apply the classification model based additionally on the further hidden states of the first and the second object.

12. A computer-implemented method (900) of classifying pairwise interactions between multiple physical objects into a set of multiple interaction types, the method comprising:

- accessing (910):

- encoder model data representing parameters of a classification model and of a set of propagation models for the set of multiple interaction types;
- observation data representing sequences of observed object feature vectors of the multiple interacting objects;

- determining sequences of pairwise interaction types for pairs of interacting objects corresponding to the observation data, comprising determining sequences of hidden states of the interacting objects corresponding to the observation data, wherein an interaction type between a first and a second interacting object is determined by:

- selecting (920) a propagation model from the set of propagation models according to an immediately preceding interaction type between the first and the second interacting object;
- determining (930) propagation data from the second interacting object to the first interacting object by applying the selected propagation model based on data of the first and the second interacting object;
- determining (940) a hidden state of the first interacting object based on at least a previous hidden state of the first interacting object and the determined propagation data;
- determining (950) the interaction type using the classification model based on at least the hidden states of the first and the second interacting object.

13. Method (900) according to claim 12, further comprising using the determined sequences of pairwise interaction types to determine a control signal for effecting an action in an environment from which the observation data originates.

14. A system (300) for training an encoder model for classifying pairwise interactions between multiple physical objects into a set of multiple interaction types and a decoder model for predicting object feature vectors of multiple interacting physical objects, the system comprising:

- a data interface (320) configured to access decoder model data (041) representing parameters of the decoder model; encoder model data (042) representing parameters of the encoder model; and training data (050) representing a plurality of training instances;
- a processor subsystem (340) configured to optimize the parameters of the decoder model and the encoder model by:

- selecting at least one training instance from the training data, the training instance comprising sequences of observed object feature vectors of multiple interacting objects;
- determining sequences of pairwise interaction types for pairs of the interacting objects according to the method of claim 12 based on the encoder model data;
- minimizing a loss of recovering an observed object feature vector by predicting the object feature vector according to the method of claim 8 based on the determined sequences of pairwise interaction types and the decoder model data.

**15.** System (300) according to claim 14, wherein the loss comprises a divergence between the determined sequences of pairwise interaction types and predicted interaction types of the decoder model, and wherein the parameters of the decoder model optimized by the processor subsystem (340) include parameters for predicting the interaction types.

**16.** A computer-implemented method (1000) of training an encoder model for classifying pairwise interactions between multiple physical objects into a set of multiple interaction types and a decoder model for predicting object feature vectors of multiple interacting physical objects, the method comprising:

- accessing (1010):

- decoder model data representing parameters of the decoder model;
- encoder model data representing parameters of the encoder model;
- training data representing a plurality of training instances;

- optimize the parameters of the decoder model and the encoder model by:

- selecting (1020) at least one training instance from the training data, the training instance comprising sequences of observed object feature vectors of multiple interacting objects;
- determining (1900) sequences of pairwise interaction types for pairs of the interacting objects according to the method of claim 11 based on the encoder model data;
- minimizing (1800) a loss of recovering an observed object feature vector by predicting the object feature vector according to the method of claim 8 based on the determined sequences of pairwise interaction types and the decoder model data.

**17.** A computer-readable medium (1100) comprising transitory or non-transitory data (1110) representing

- instructions which, when executed by a processor system, cause the processor system to perform the computer-implemented method according to any one of claims 8, 12, and 16; and/or
- decoder model data for predicting object feature vectors of multiple interacting physical objects according to claim 8; and/or
- encoder model data for classifying pairwise interactions between multiple physical objects into a set of multiple interaction types according to claim 12.

Fig. 1

Fig. 2

Fig. 3

Fig. 4

Fig. 5

EP 3 783 538 A1

Fig. 6

Fig. 7

800

810

820

830
832
834
836

**Fig. 8**

900

910

920

930

940

950

**Fig. 9**

**Fig. 10**

**Fig. 11**

Europäisches
Patentamt

European
Patent Office

Office européen
des brevets

# EUROPEAN SEARCH REPORT

Application Number

EP 19 19 3342

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NACHIKET DEO ET AL: "Multi-Modal Trajectory Prediction of Surrounding Vehicles with Maneuver based LSTMs", ARXIV.ORG, CORNELL UNIVERSITY LIBRARY, 201 OLIN LIBRARY CORNELL UNIVERSITY ITHACA, NY 14853, 15 May 2018 (2018-05-15), XP080878217, * abstract; Sections I and III * | 1-17 | INV. G06N3/04 G06N3/08 |
| A | DING WENCHAO ET AL: "Predicting Vehicle Behaviors Over An Extended Horizon Using Behavior Interaction Network", 2019 INTERNATIONAL CONFERENCE ON ROBOTICS AND AUTOMATION (ICRA), IEEE, 20 May 2019 (2019-05-20), pages 8634-8640, XP033594131, DOI: 10.1109/ICRA.2019.8794146 [retrieved on 2019-08-09] * abstract; Sections I, III, and IV * | 1-17 | |
| A | XUE HAO ET AL: "Bi-Prediction: Pedestrian Trajectory Prediction Based on Bidirectional LSTM Classification", 2017 INTERNATIONAL CONFERENCE ON DIGITAL IMAGE COMPUTING: TECHNIQUES AND APPLICATIONS (DICTA), IEEE, 29 November 2017 (2017-11-29), pages 1-8, XP033287302, DOI: 10.1109/DICTA.2017.8227412 [retrieved on 2017-12-19] * abstract; Sections I, III-V * | 1-17 | TECHNICAL FIELDS SEARCHED (IPC)  G06N |

-/--

The present search report has been drawn up for all claims

| Place of search | Date of completion of the search | Examiner |
|---|---|---|
| The Hague | 28 February 2020 | Klasen, TJ |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt
European
Patent Office
Office européen
des brevets

## EUROPEAN SEARCH REPORT

Application Number

EP 19 19 3342

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LI JIACHEN ET AL: "Coordination and Trajectory Prediction for Vehicle Interactions via Bayesian Generative Modeling", 2019 IEEE INTELLIGENT VEHICLES SYMPOSIUM (IV), IEEE, 9 June 2019 (2019-06-09), pages 2496-2503, XP033605967, DOI: 10.1109/IVS.2019.8813821 [retrieved on 2019-08-26] * abstract; Sections I, III, and IV * | 1-17 | |
| A | VINEET KOSARAJU ET AL: "Social-BiGAT: Multimodal Trajectory Forecasting using Bicycle-GAN and Graph Attention Networks", ARXIV.ORG, CORNELL UNIVERSITY LIBRARY, 201 OLIN LIBRARY CORNELL UNIVERSITY ITHACA, NY 14853, 5 July 2019 (2019-07-05), XP081439073, * abstract; Sections 1, 3, and 4 * | 1-17 | |

**TECHNICAL FIELDS
SEARCHED      (IPC)**

The present search report has been drawn up for all claims

| Place of search | Date of completion of the search | Examiner |
|---|---|---|
| The Hague | 28 February 2020 | Klasen, TJ |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
 
& : member of the same patent family, corresponding
   document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KIPF et al.** *Neural Relational Inference for Interacting Systems, https://arxiv.org/abs/1802.04687*